(19) Europäisches Patentamt
European Patent Office
Office européen des brevets

(11) **EP 4 557 639 A1**

(12) **EUROPEAN PATENT APPLICATION**
published in accordance with Art. 153(4) EPC

(43) Date of publication:
**21.05.2025 Bulletin 2025/21**

(21) Application number: **23845241.1**

(22) Date of filing: **30.06.2023**

(51) International Patent Classification (IPC):
**H04J 3/06** (2006.01)　　**H04B 10/60** (2013.01)

(52) Cooperative Patent Classification (CPC):
**H04B 10/60; H04J 3/06**

(86) International application number:
**PCT/CN2023/104752**

(87) International publication number:
**WO 2024/022028 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022 CN 202210893253**

(71) Applicant: **Huawei Technologies Co., Ltd.**
**Shenzhen, Guangdong 518129 (CN)**

(72) Inventors:
- **FENG, Qiguang**
  **Shenzhen, Guangdong 518129 (CN)**
- **LI, Liangchuan**
  **Shenzhen, Guangdong 518129 (CN)**
- **CHANG, Tianhai**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **TRANSMISSION METHOD AND RELATED DEVICE**

(57)　This application discloses a transmission method and a related device. The method includes: An optical transmitting device generates a first transmission frame, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame. The optical transmitting device sends the first transmission frame to an optical receiving device.

FIG. 9

## Description

This application claims priority to Chinese Patent Application No. 202210893253.0, filed with the China National Intellectual Property Administration on July 27, 2022 and entitled "TRANSMISSION METHOD AND RELATED DEVICE", which is incorporated herein by reference in its entirety.

## TECHNICAL FIELD

This application relates to the field of optical communication technologies, and in particular, to a transmission method and a related device.

## BACKGROUND

A time division multiple access (time division multiple access, TDMA) technology is a most commonly used multiple access technology in point-to-multipoint communication, and has advantages of low cost, high flexibility, and easy support for a large quantity of users. The time division multiple access technology is widely used in wireless and fixed access networks. An important feature of a time division multiple access system is as follows: In an uplink, different leaf nodes send uplink signals in different slots, and a root node needs to process signals from different leaf nodes in different slots. Because different leaf nodes have different links to the root node, parameters such as signal power and delays to the root node are significantly different. In this case, the root node first needs to complete physical synchronization between the root node and the leaf nodes before entering a data processing process.

However, in the time division multiple access system, how to complete physical synchronization between the root node and the leaf nodes is a problem worth considering.

## SUMMARY

This application provides a data transmission method and a related device, to implement physical synchronization between an optical transmitting device and an optical receiving device.

A first aspect of this application provides a data transmission method, including: An optical transmitting device generates a first transmission frame, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is a part or the whole of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and the optical transmitting device sends the generated first transmission frame to an optical receiving device.

In the foregoing technical solution, the optical transmitting device sends the first transmission frame to the optical receiving device. The first transmission frame includes the first sequence and the second sequence. Therefore, the optical receiving device implements physical synchronization between the optical transmitting device and the optical receiving device based on a transmission frame, so that the optical receiving device restores data sent by the optical transmitting device. For example, the optical receiving device may perform, based on the first sequence, at least one of the following: signal detection, clock recovery, or frequency offset estimation. The optical receiving device performs, based on the second sequence, at least one of the following: framing, channel estimation, or fine frequency offset estimation, to implement physical synchronization between the optical receiving device and the optical transmitting device. The first sequence corresponds to the first single-frequency signal and the second single-frequency signal in frequency domain, so that the optical receiving device completes two operations: clock synchronization and polarization diversity, based on the first single-frequency signal and the second single-frequency signal at the same time. In addition, the optical receiving device may further multiplex the first single-frequency signal and the second single-frequency signal to complete an operation like frequency synchronization.

According to the first aspect, in a possible implementation, the first sequence includes 128 symbols, 160 symbols, or 192 symbols.

In this implementation, some possible lengths of the first sequence are provided. It can be learned from the lengths shown above that the first sequence is short, duration is short, and overheads are small, so that the optical receiving device implements a corresponding physical synchronization function based on the first sequence.

According to the first aspect, in a possible implementation, frequency spacing between the frequency of the first single-frequency signal and a reference frequency is equal to frequency spacing between the frequency of the second single-frequency signal and the reference frequency.

According to the first aspect, in a possible implementation, the reference frequency is a carrier center frequency, and the carrier center frequency is a center frequency of a carrier that carries a transmission frame.

According to the first aspect, in a possible implementation, the method further includes: The optical transmitting device generates the first sequence based on a modulation format of the first transmission frame, where the modulation format is a modulation format used by a modulator to modulate the first transmission frame.

It can be learned that, in this implementation, the optical transmitting device may generate the first sequence with reference to the modulation format of the first transmission frame. This helps the solution adapt to a modulation format in a communication system, and ensures feasibility of the solution.

According to the first aspect, in a possible implementation, if the modulation format of the first transmission frame is binary phase shift keying (binary phase shift keying, BPSK), the first sequence includes at least one of the following: a plurality of repetitions of [1, -1], a plurality of repetitions of [1, 1, -1, -1], or a plurality of repetitions of [1, 1, 1, -1, -1, -1]; if the modulation format of the first transmission frame is quadrature amplitude shift keying (4-amplitude shift keying, 4ASK), the first sequence includes at least one of the following: a plurality of repetitions of [3, -3], a plurality of repetitions of [3, 3, -3, -3], or a plurality of repetitions of [3, 3, 3, -3, -3, -3]; or if the modulation format of the first transmission frame is quadrature phase shift keying (quadrature phase shift keying, QPSK), the first sequence includes at least one of the following: a plurality of repetitions of [1+j, 1-j], a plurality of repetitions of [-1-j, 1+j], or a plurality of repetitions of [1+j, -1+j, -1-j, 1-j].

According to the first aspect, in a possible implementation, the second sequence includes at least one of the following: a maximum length sequence (maximum length sequence, M sequence), a gold sequence (Gold sequence), and a constant amplitude zero auto-correlation (constant amplitude zero auto-correlation, CAZAC) sequence.

According to the first aspect, in a possible implementation, a frequency range corresponding to the first bandwidth is represented as $[-f_1, f_1]$, and the any two frequencies fall within a frequency range $[-f_1/L, f_1/L]$, where L is an integer greater than or equal to 2; or a frequency range corresponding to the first bandwidth is represented as $[-f_1, f_1]$, and the any two frequencies fall within a frequency range $[-f_1/L, 0)$ and/or a frequency range $(0, f_1/L]$, where L is an integer greater than or equal to 2.

In this implementation, a frequency range within which the any two frequencies fall is limited. Because of interference or another factor in a transmission process, a difference between signal amplitudes of a frequency-domain signal corresponding to the second sequence in frequency domain in another frequency range is relatively large. Therefore, it is ensured that the second sequence in the first transmission frame received on a receive end side has the foregoing frequency domain feature in frequency domain.

According to the first aspect, in a possible implementation, a quantity of symbols included in the second sequence is an integer multiple of 16 or 24.

In this implementation, a limitation on a length of the second sequence is shown. For example, the second sequence includes 16 symbols, 32 symbols, 48 symbols, 64 symbols, 80 symbols, 96 symbols, 112 symbols, or 128 symbols. It can be learned that the second sequence is short, duration is short, and overheads are small, so that the optical receiving device implements a corresponding physical synchronization function based on the second sequence.

According to the first aspect, in a possible implementation, the first sequence is used by the optical receiving device to perform at least one of the following: signal detection, polarization diversity, clock recovery, or frequency offset estimation. In this implementation, the optical receiving device may implement some corresponding physical synchronization functions based on the first sequence.

According to the first aspect, in a possible implementation, the second sequence is used by the optical receiving device to perform at least one of the following: framing, channel estimation, or fine frequency offset estimation. In this implementation, the optical receiving device may implement some corresponding physical synchronization functions based on the second sequence, to complete physical synchronization with the optical transmitting device.

According to the first aspect, in a possible implementation, the first transmission frame further includes a third sequence, and the third sequence is used for assisting the optical receiving device in performing channel estimation.

In this implementation, the first transmission frame further includes the third sequence, and the optical receiving device may perform channel estimation based on the third sequence, to improve precision of channel estimation.

According to the first aspect, in a possible implementation, the third sequence includes at least one of the following: a plurality of repetitions of the second sequence or a sequence obtained performing symbol shift on the second sequence. The third sequence may be obtained based on the second sequence, so that the optical receiving device performs channel estimation based on the third sequence, to improve precision of channel estimation.

According to the first aspect, in a possible implementation, a total quantity of symbols included in the first sequence, the second sequence, and the third sequence is less than 288.

It can be learned that a length of a sequence used for physical synchronization in the first transmission frame is short, and therefore physical layer overheads are small, and channel utilization is high. A total length of the first sequence, the second sequence, and the third sequence is short. This helps the optical receiving device quickly complete physical synchronization with the optical transmitting device, implements fast recovery of uplink data sent by the optical transmitting device, and ensures uplink transmission performance of a point-to-multipoint communication system.

According to the first aspect, in a possible implementation, the first sequence includes N subsequences, and each of the N subsequences corresponds to one time period. The optical transmitting device outputs a subsequence in a time period corresponding to the subsequence. N is an integer greater than or equal to 2. A first time period is one of the N time periods corresponding to the N subsequences.

A frequency of the first single-frequency signal in any one of the N time periods is fixed, a frequency of the second single-frequency signal in any one of the N time periods is fixed, and a frequency of the first single-frequency signal and a frequency of the second single-frequency signal are different in a same time period.

In this implementation, the first sequence may include N subsequences, and each subsequence corresponds to two single-frequency signals with a fixed frequency in frequency domain, so that the optical receiving device completes some physical synchronization functions based on the N subsequences.

According to the first aspect, in a possible implementation, frequencies of the first single-frequency signal in any two adjacent time periods of the N time periods are not equal, and frequencies of the second single-frequency signal in any two adjacent time periods of the N time periods are not equal.

According to the first aspect, in a possible implementation, the second sequence includes M subsequences. At least one subsequence in the M subsequences satisfies the following condition: a difference between signal amplitudes of a frequency-domain signal corresponding to the subsequence in frequency domain at any two frequencies in the first bandwidth is less than the first threshold, or a difference between signal amplitudes of a frequency -domain signal corresponding to the subsequence in frequency domain at any two frequencies other than a frequency 0 in the first bandwidth is less than the first threshold. M is an integer greater than or equal to 2.

It can be learned that the second sequence may include M subsequences, and at least one subsequence has the foregoing frequency domain feature, so that the optical receiving device performs some physical synchronization functions based on the M subsequences.

According to the first aspect, in a possible implementation, the first transmission frame is a transmission frame corresponding to a first polarization state. The method further includes: The optical transmitting device generates a second transmission frame corresponding to a second polarization state, where the second transmission frame includes a fourth sequence and a fifth sequence, the fourth sequence corresponds to a third single-frequency signal and a fourth single-frequency signal in frequency domain, a frequency of the third single-frequency signal is fixed in the first time period, a frequency of the fourth single-frequency signal is fixed in the first time period, the frequency of the third single-frequency signal and the frequency of the fourth single-frequency signal are different in the first time period, a difference between signal amplitudes of a frequency-domain signal corresponding to the fifth sequence in frequency domain at any two frequencies in second bandwidth is less than the first threshold, or a difference between signal amplitudes of a frequency-domain signal corresponding to the fifth sequence in frequency domain at any two frequencies other than a frequency 0 in second bandwidth is less than the first threshold, and the second bandwidth is bandwidth used by the optical transmitting device to send the second transmission frame; and the optical transmitting device sends the second transmission frame to the optical receiving device.

In this implementation, in a multi-polarization state scenario, the optical transmitting device may separately send the first transmission frame corresponding to the first polarization state and the second transmission frame corresponding to the second polarization state. Therefore, the optical receiving device implements physical synchronization with the optical transmitting device based on the first transmission frame corresponding to the first polarization state and the second transmission frame corresponding to the second polarization state.

According to the first aspect, in a possible implementation, the frequency of the third single-frequency signal and the frequency of the first single-frequency signal are equal in the first time period, and the frequency of the fourth single-frequency signal and the frequency of the second single-frequency signal period are equal in the first time period.

According to the first aspect, in a possible implementation, the fifth sequence is obtained by performing symbol shift on the second sequence.

According to the first aspect, in a possible implementation, a start time domain position of the first transmission frame and a start time domain position of the second transmission frame are the same, a length of the fourth sequence and the length of the first sequence are equal, and a length of the fifth sequence and the length of the second sequence are equal. It can be learned that this implementation helps the optical receiving device better perform physical synchronization to improve synchronization performance. Further, the first transmission frame corresponding to the first polarization state and the second transmission frame corresponding to the second polarization state are transmitted in alignment. This helps improve bandwidth utilization of a system.

A second aspect of this application provides a transmission method, including: An optical receiving device receives a first transmission frame from an optical transmitting device, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and the optical receiving device performs physical synchronization with the optical transmitting device based on the first transmission frame.

In the foregoing technical solution, the optical receiving device receives the first transmission frame from the optical transmitting device. The first transmission frame includes the first sequence and the second sequence. The optical receiving device performs physical synchronization with the optical transmitting device based on the first transmission frame, so that the optical receiving device restores data sent by the optical transmitting device. For example, the optical receiving device may perform, based on the first sequence, at least one of the following: signal detection, clock recovery, or frequency offset estimation. The optical receiving device performs, based on the second sequence, at least one of the following: framing, channel estimation, and fine frequency offset estimation, to implement physical synchronization between the optical receiving device and the optical transmitting device. The first sequence corresponds to the first single-frequency signal and the second single-frequency signal in frequency domain, so that the optical receiving device completes two operations: clock synchronization and polarization diversity, based on the first single-frequency signal and the second single-frequency signal at the same time. In addition, the optical receiving device may further multiplex the first single-frequency signal and the second single-frequency signal to complete an operation like frequency synchronization.

According to the second aspect, in a possible implementation, the first sequence includes 128 symbols, 160 symbols, or 192 symbols.

In this implementation, some possible lengths of the first sequence are provided. It can be learned from the lengths shown above that the first sequence is short, duration is short, and overheads are small, so that the optical receiving device implements a corresponding physical synchronization function based on the first sequence.

According to the second aspect, in a possible implementation, frequency spacing between the frequency of the first single-frequency signal and a reference frequency is equal to frequency spacing between the frequency of the second single-frequency signal and the reference frequency.

According to the second aspect, in a possible implementation, the reference frequency is a carrier center frequency, and the carrier center frequency is a center frequency of a carrier that carries a transmission frame.

According to the second aspect, in a possible implementation, the second sequence includes at least one of the following: an M sequence, a Gold sequence, and a CAZAC sequence.

According to the second aspect, in a possible implementation, a frequency range corresponding to the first bandwidth is represented as $[-f_1, f_1]$, and the any two frequencies fall within a frequency range $[-f_1/L, f_1/L]$, where L is an integer greater than or equal to 2; or a frequency range corresponding to the first bandwidth is represented as $[-f_1, f_1]$, and the any two frequencies fall within a frequency range $[-f_1/L, 0)$ and/or a frequency range $(0, f_1/L]$, where L is an integer greater than or equal to 2.

In this implementation, a frequency range within which the any two frequencies fall is limited. Because of interference or another factor in a transmission process, a difference between signal amplitudes of a frequency-domain signal corresponding to the second sequence in frequency domain in another frequency range is relatively large. Therefore, it is ensured that the second sequence in the first transmission frame received on an optical receiving device side has the foregoing frequency domain feature in frequency domain.

According to the second aspect, in a possible implementation, a quantity of symbols included in the second sequence is an integer multiple of 16 or 24.

In this implementation, a limitation on a length of the second sequence is shown. For example, the second sequence includes 16 symbols, 32 symbols, 48 symbols, 64 symbols, 80 symbols, 96 symbols, 112 symbols, or 128 symbols. It can be learned that the second sequence is short, duration is short, and overheads are small, so that the optical receiving device implements a corresponding physical synchronization function based on the second sequence.

According to the second aspect, in a possible implementation, the first sequence includes N subsequences, and each of the N subsequences corresponds to one time period. The optical transmitting device outputs a subsequence in a time period corresponding to the subsequence. N is an integer greater than or equal to 2. A first time period is one of the N time periods corresponding to the N subsequences.

A frequency of the first single-frequency signal in any one of the N time periods is fixed, a frequency of the second single-frequency signal in any one of the N time periods is fixed, and a frequency of the first single-frequency signal and a frequency of the second single-frequency signal are different in a same time period.

In this implementation, the first sequence may include N subsequences, and each subsequence corresponds to two single-frequency signals with a fixed frequency in frequency domain, so that the optical receiving device completes some physical synchronization functions based on the N subsequences.

According to the second aspect, in a possible implementation, frequencies of the first single-frequency signal in any two adjacent time periods of the N time periods are not equal, and frequencies of the second single-frequency signal in any two adjacent time periods of the N time periods are not equal.

According to the second aspect, in a possible implementation, the second sequence includes M subsequences. At least one subsequence in the M subsequences satisfies the following condition: a difference between signal amplitudes of a frequency-domain signal corresponding to the subsequence in frequency domain at any two frequencies in the first bandwidth is less than the first threshold, or a difference between signal amplitudes of a frequency -domain signal corresponding to the subsequence in frequency domain at any two frequencies other than a frequency 0 in the first bandwidth is less than the first threshold. M is an integer greater than or equal to 2.

It can be learned that the second sequence may include M subsequences, and at least one subsequence has the foregoing frequency domain feature, so that the optical receiving device performs some physical synchronization functions based on the M subsequences.

According to the second aspect, in a possible implementation, the second sequence satisfies the following condition: in correlation values obtained by performing a delay auto-correlation operation on the second sequence, a corresponding correlation value when a delay is 0 is the largest, and a difference between a corresponding correlation value when the delay is not 0 and the corresponding correlation value when the delay is 0 is less than or equal to a second threshold; or the second sequence includes M subsequences, and at least one subsequence in the M subsequences satisfies the following condition: in correlation values obtained by performing a delay auto-correlation operation on the subsequence, a corresponding correlation value when a delay is 0 is the largest, and a difference between a corresponding correlation value when the delay is not 0 and the corresponding correlation value when the delay is 0 is less than or equal to a second threshold, where M is an integer greater than or equal to 2.

It can be learned that auto-correlation of the second sequence or the subsequence in the second sequence is relatively good. This helps improve framing performance.

According to the second aspect, in a possible implementation, the first sequence is used by the optical receiving device to perform at least one of the following: signal detection, polarization diversity, clock recovery, or frequency offset estimation. In this implementation, the optical receiving device may implement some corresponding physical synchronization functions based on the first sequence.

According to the second aspect, in a possible implementation, the second sequence is used by the optical receiving device to perform at least one of the following: framing, channel estimation, or fine frequency offset estimation. In this implementation, the optical receiving device may implement some corresponding physical synchronization functions based on the second sequence, to complete physical synchronization with the optical transmitting device.

According to the second aspect, in a possible implementation, the first transmission frame further includes a third sequence, and the third sequence is used for assisting the optical receiving device in performing channel estimation.

In this implementation, the first transmission frame further includes the third sequence, and the optical receiving device may perform channel estimation based on the third sequence, to improve precision of channel estimation.

According to the second aspect, in a possible implementation, the first transmission frame is a transmission frame corresponding to a first polarization state. The method further includes: The optical receiving device receives, from the optical transmitting device, a second transmission frame corresponding to a second polarization state, where the second transmission frame includes a fourth sequence and a fifth sequence, the fourth sequence corresponds to a third single-frequency signal and a fourth single-frequency signal in frequency domain, a frequency of the third single-frequency signal is fixed in the first time period, a frequency of the fourth single-frequency signal is fixed in the first time period, the frequency of the third single-frequency signal and the frequency of the fourth single-frequency signal are different in the first time period, a difference between signal amplitudes of a frequency-domain signal corresponding to the fifth sequence in frequency domain at any two frequencies in second bandwidth is less than the first threshold, or a difference between signal amplitudes of a frequency-domain signal corresponding to the fifth sequence in frequency domain at any two frequencies other than a frequency 0 in second bandwidth is less than the first threshold, and the second bandwidth is bandwidth used by the optical transmitting device to send the second transmission frame; and the optical receiving device performs physical synchronization with the optical transmitting device based on the first transmission frame, including: The optical receiving device performs physical synchronization with the optical transmitting device based on the first transmission frame and the second transmission frame.

In this implementation, in a multi-polarization state scenario, the optical receiving device receives the first transmission frame corresponding to the first polarization state and the second transmission frame corresponding to the second polarization state. Therefore, the optical receiving device implements physical synchronization with the optical transmitting device based on the first transmission frame corresponding to the first polarization state and the second transmission frame corresponding to the second polarization state.

According to the second aspect, in a possible implementation, the frequency of the third single-frequency signal and the frequency of the first single-frequency signal are equal in the first time period, and the frequency of the fourth single-frequency signal and the frequency of the second single-frequency signal period are equal in the first time period.

According to the second aspect, in a possible implementation, the fifth sequence is obtained by performing symbol shift on the second sequence.

According to the second aspect, in a possible implementation, a start time domain position of the first transmission frame and a start time domain position of the second transmission frame are the same, a length of the fourth sequence and the length of the first sequence are equal, and a length of the fifth sequence and the length of the second sequence are equal. It can be learned that this implementation helps the optical receiving device better perform physical synchronization to improve synchronization performance. Further, the first transmission frame corresponding to the first polarization state and the second transmission frame corresponding to the second polarization state are transmitted in alignment. This helps improve bandwidth utilization of a system.

A third aspect of this application provides an optical transmitting device, including: a generation module, configured to generate a first transmission frame, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is a part or the whole of a time period in which the optical transmitting device sends the first sequence; and a difference between signal amplitudes of a frequency -domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and a sending module, configured to send the generated first transmission frame to an optical receiving device.

For descriptions of beneficial effects shown in this aspect, refer to those shown in the first aspect. Details are not described again.

According to the third aspect, in a possible implementation, the first sequence includes 128 symbols, 160 symbols, or 192 symbols.

According to the third aspect, in a possible implementation, frequency spacing between the frequency of the first single-frequency signal and a reference frequency is equal to frequency spacing between the frequency of the second single-frequency signal and the reference frequency.

According to the third aspect, in a possible implementation, the reference frequency is a carrier center frequency, and the carrier center frequency is a center frequency of a carrier that carries a transmission frame.

According to the third aspect, in a possible implementation, the generation module is specifically configured to generate the first sequence based on a modulation format of the first transmission frame, where the modulation format is a modulation format used by a modulator to modulate the first transmission frame.

According to the third aspect, in a possible implementation, if the modulation format of the first transmission frame is BPSK, the first sequence includes at least one of the following: a plurality of repetitions of [1, -1], a plurality of repetitions of [1, 1, -1, -1], or a plurality of repetitions of [1, 1, 1, -1, -1, -1]; if the modulation format of the first transmission frame is 4ASK, the first sequence includes at least one of the following: a plurality of repetitions of [3, -3], a plurality of repetitions of [3, 3, -3, -3], or a plurality of repetitions of [3, 3, 3, -3, -3, -3]; or if the modulation format of the first transmission frame is QPSK, the first sequence includes at least one of the following: a plurality of repetitions of [1+j, 1-j], a plurality of repetitions of [-1-j, 1+j], or a plurality of repetitions of [1+j, -1+j, -1-j, 1-j].

According to the third aspect, in a possible implementation, the second sequence includes at least one of the following: an M sequence, a Gold sequence, and a CAZAC sequence.

According to the third aspect, in a possible implementation, a frequency range corresponding to the first bandwidth is represented as $[-f_1, f_1]$, and the any two frequencies fall within a frequency range $[-f_1/L, f_1/L]$, where L is an integer greater than or equal to 2; or a frequency range corresponding to the first bandwidth is represented as $[-f_1, f_1]$, and the any two frequencies fall within a frequency range $[-f_1/L, 0)$ and/or a frequency range $(0, f_1/L]$, where L is an integer greater than or equal to 2.

According to the third aspect, in a possible implementation, a quantity of symbols included in the second sequence is an integer multiple of 16 or 24.

According to the third aspect, in a possible implementation, the first sequence is used by the optical receiving device to perform at least one of the following: signal detection, polarization diversity, clock recovery, or frequency offset estimation.

According to the third aspect, in a possible implementation, the first transmission frame further includes a third sequence, and the third sequence is used for assisting the optical receiving device in performing channel estimation.

According to the third aspect, in a possible implementation, the third sequence includes at least one of the following: a plurality of repetitions of the second sequence or a sequence obtained performing symbol shift on the second sequence.

According to the third aspect, in a possible implementation, a total quantity of symbols included in the first sequence, the second sequence, and the third sequence is less than 288.

According to the third aspect, in a possible implementation, the first sequence includes N subsequences, and each of the N subsequences corresponds to one time period. The optical transmitting device outputs a subsequence in a time period corresponding to the subsequence. N is an integer greater than or equal to 2. A first time period is one of the N time periods corresponding to the N subsequences. A frequency of the first single-frequency signal in any one of the N time periods is fixed, a frequency of the second single-frequency signal in any one of the N time periods is fixed, and a frequency of the first single-frequency signal and a frequency of the second single-frequency signal are different in a same time period.

According to the third aspect, in a possible implementation, frequencies of the first single-frequency signal in any two adjacent time periods of the N time periods are not equal, and frequencies of the second single-frequency signal in any two adjacent time periods of the N time periods are not equal.

According to the third aspect, in a possible implementation, the second sequence includes M subsequences. At least one subsequence in the M subsequences satisfies the following condition: a difference between signal amplitudes of a frequency-domain signal corresponding to the subsequence in frequency domain at any two frequencies in the first bandwidth is less than the first threshold, or a difference between signal amplitudes of a frequency -domain signal corresponding to the subsequence in frequency domain at any two frequencies other than a frequency 0 in the first bandwidth is less than the first threshold. M is an integer greater than or equal to 2.

According to the third aspect, in a possible implementation, the first transmission frame is a transmission frame corresponding to a first polarization state. The generation module is further configured to generate a second transmission frame corresponding to a second polarization state, where the second transmission frame includes a fourth sequence and a fifth sequence, the fourth sequence corresponds to a third single-frequency signal and a fourth single-frequency signal in frequency domain, a frequency of the third single-frequency signal is fixed in the first time period, a frequency of the fourth single-frequency signal is fixed in the first time period, the frequency of the third single-frequency signal and the frequency of the fourth single-frequency signal are different in the first time period, a difference between signal amplitudes of a frequency-domain signal corresponding to the fifth sequence in frequency domain at any two frequencies in second bandwidth is less than the first threshold, or a difference between signal amplitudes of a frequency-domain signal corresponding to the fifth sequence in frequency domain at any two frequencies other than a frequency 0 in second bandwidth is less than the first threshold, and the second bandwidth is bandwidth used by the optical transmitting device to send the second transmission frame; and the sending module is further configured to send the second transmission frame to the optical receiving device.

According to the third aspect, in a possible implementation, the frequency of the third single-frequency signal and the frequency of the first single-frequency signal are equal in the first time period, and the frequency of the fourth single-frequency signal and the frequency of the second single-frequency signal period are equal in the first time period.

According to the third aspect, in a possible implementation, the fifth sequence is obtained by performing symbol shift on the second sequence.

According to the third aspect, in a possible implementation, a start time domain position of the first transmission frame and a start time domain position of the second transmission frame are the same, a length of the fourth sequence and the length of the first sequence are equal, and a length of the fifth sequence and the length of the second sequence are equal.

A fourth aspect of this application provides an optical receiving device, including: a receiving module, configured to receive a first transmission frame from an optical transmitting device, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and a synchronization module, configured to perform physical synchronization with the optical transmitting device based on the first transmission frame.

For descriptions of beneficial effects shown in this aspect, refer to those shown in the second aspect. Details are not described again.

According to the fourth aspect, in a possible implementation, the first sequence includes 128 symbols, 160 symbols, or 192 symbols.

According to the fourth aspect, in a possible implementation, frequency spacing between the frequency of the first single-frequency signal and a reference frequency is equal to frequency spacing between the frequency of the second single-frequency signal and the reference frequency.

According to the fourth aspect, in a possible implementation, the reference frequency is a carrier center frequency, and the carrier center frequency is a center frequency of a carrier that carries a transmission frame.

According to the fourth aspect, in a possible implementation, the second sequence includes at least one of the following: an M sequence, a Gold sequence, and a CAZAC sequence.

According to the fourth aspect, in a possible implementation, a frequency range corresponding to the first bandwidth is represented as $[-f_1, f_1]$, and the any two frequencies fall within a frequency range $[-f_1/L, f_1/L]$, where L is an integer greater than or equal to 2; or

a frequency range corresponding to the first bandwidth is represented as $[-f_1, f_1]$, and the any two frequencies fall within a frequency range $[-f_1/L, 0)$ and/or a frequency range $(0, f_1/L]$, where L is an integer greater than or equal to 2.

According to the fourth aspect, in a possible implementation, a quantity of symbols included in the second sequence is an integer multiple of 16 or 24.

According to the fourth aspect, in a possible implementation, the first sequence includes N subsequences, and each of the N subsequences corresponds to one time period. The optical transmitting device outputs a subsequence in a time period corresponding to the subsequence. N is an integer greater than or equal to 2. A first time period is one of the N time periods corresponding to the N subsequences.

A frequency of the first single-frequency signal in any one of the N time periods is fixed, a frequency of the second single-frequency signal in any one of the N time periods is fixed, and a frequency of the first single-frequency signal and a frequency of the second single-frequency signal are different in a same time period.

According to the fourth aspect, in a possible implementation, frequencies of the first single-frequency signal in any two adjacent time periods of the N time periods are not equal, and frequencies of the second single-frequency signal in any two adjacent time periods of the N time periods are not equal.

According to the fourth aspect, in a possible implementation, the second sequence includes M subsequences. At least one subsequence in the M subsequences satisfies the following condition: a difference between signal amplitudes of a frequency-domain signal corresponding to the subsequence in frequency domain at any two frequencies in the first bandwidth is less than the first threshold, or a difference between signal amplitudes of a frequency-domain signal corresponding to the subsequence in frequency domain at any two frequencies other than a frequency 0 in the first bandwidth is less than the first threshold. M is an integer greater than or equal to 2.

According to the fourth aspect, in a possible implementation, the second sequence satisfies the following condition: in correlation values obtained by performing a delay auto-correlation operation on the second sequence, a corresponding correlation value when a delay is 0 is the largest, and a difference between a corresponding correlation value when the delay is not 0 and the corresponding correlation value when the delay is 0 is less than or equal to a second threshold; or

the second sequence includes M subsequences, and at least one subsequence in the M subsequences satisfies the following condition: in correlation values obtained by performing a delay auto-correlation operation on the subsequence, a corresponding correlation value when a delay is 0 is the largest, and a difference between a corresponding correlation value when the delay is not 0 and the corresponding correlation value when the delay is 0 is less than or equal to a second threshold, where M is an integer greater than or equal to 2.

According to the fourth aspect, in a possible implementation, the first sequence is used by the optical receiving device to perform at least one of the following: signal detection, polarization diversity, clock recovery, or frequency offset estimation. In this implementation, the optical receiving device may implement some corresponding physical synchronization functions based on the first sequence.

According to the fourth aspect, in a possible implementation, the second sequence is used by the optical receiving device to perform at least one of the following: framing, channel estimation, or fine frequency offset estimation. In this implementation, the optical receiving device may implement some corresponding physical synchronization functions based on the second sequence, to complete physical synchronization with the optical transmitting device.

According to the fourth aspect, in a possible implementation, the first transmission frame further includes a third sequence, and the third sequence is used for assisting the optical receiving device in performing channel estimation.

According to the fourth aspect, in a possible implementation, the first transmission frame is a transmission frame corresponding to a first polarization state. The receiving module is further configured to receive, from the optical transmitting device, a second transmission frame corresponding to a second polarization state, where the second transmission frame includes a fourth sequence and a fifth sequence, the fourth sequence corresponds to a third single-frequency signal and a fourth single-frequency signal in frequency domain, a frequency of the third single-frequency signal is fixed in the first time period, a frequency of the fourth single-frequency signal is fixed in the first time period, the frequency of the third single-frequency signal and the frequency of the fourth single-frequency signal are different in the first time period, a difference between signal amplitudes of a frequency-domain signal corresponding to the fifth sequence in frequency domain at any two frequencies in second bandwidth is less than the first threshold, or a difference between signal amplitudes of a frequency-domain signal corresponding to the fifth sequence in frequency domain at any two frequencies other than a frequency 0 in second bandwidth is less than the first threshold, and the second bandwidth is bandwidth used by the optical transmitting device to send the second transmission frame; and the synchronization module is specifically configured to perform physical synchronization with the optical transmitting device based on the first transmission frame and the second transmission frame.

According to the fourth aspect, in a possible implementation, the frequency of the third single-frequency signal and the frequency of the first single-frequency signal are equal in the first time period, and the frequency of the fourth single-frequency signal and the frequency of the second single-frequency signal period are equal in the first time period.

According to the fourth aspect, in a possible implementation, the fifth sequence is obtained by performing symbol shift on the second sequence.

According to the fourth aspect, in a possible implementation, a start time domain position of the first transmission frame and a start time domain position of the second transmission frame are the same, a length of the fourth sequence and the length of the first sequence are equal, and a length of the fifth sequence and the length of the second sequence are equal.

A fifth aspect of this application provides an optical transmitting device, including a processor. The processor is configured to invoke and run a computer program stored in a memory, to enable the processor to implement any implementation of the first aspect.

Optionally, the optical transmitting device further includes a transceiver. The processor is further configured to control the transceiver to send and receive signals.

Optionally, the optical transmitting device includes the memory, and the memory stores a computer program.

A sixth aspect of this application provides an optical receiving device, including a processor. The processor is configured to invoke and run a computer program stored in a memory, to enable the processor to implement any implementation of the second aspect.

Optionally, the optical receiving device further includes a transceiver. The processor is further configured to control the transceiver to send and receive signals.

Optionally, the optical receiving device includes the memory, and the memory stores a computer program.

A seventh aspect of this application provides an optical fiber communication system, including an optical transmitting device and an optical receiving device, where the optical transmitting device performs the method according to any one of the implementations of the first aspect, and the optical receiving device is configured to perform the method according to any one of the implementations of the second aspect.

An eighth aspect of this application provides a digital processing chip, where the digital processing chip includes a processor, and the processor is configured to invoke computer instructions or a computer program stored in a memory, to perform the method according to any one of the implementations of the first aspect or the second aspect.

According to the eighth aspect, in a possible implementation, the data processing chip further includes the memory, and the memory and the processor are interconnected via a line.

A ninth aspect of this application provides a computer-readable storage medium, including instructions. When the instructions are run on a computer, the computer is enabled to perform the method according to any one of the implementations of the first aspect or the second aspect.

A tenth aspect of this application provides a computer program product including instructions. When the computer program product is run on a computer, the computer is enabled to perform the method according to any one of the implementations of the first aspect or the second aspect.

## BRIEF DESCRIPTION OF DRAWINGS

FIG. 1 is a diagram of a structure of an optical fiber communication system according to an embodiment of this application;
FIG. 2 is a diagram of another structure of an optical fiber communication system according to an embodiment of this application;
FIG. 3 is a diagram of another structure of an optical fiber communication system according to an embodiment of this application;
FIG. 4 is a diagram of a frame structure used in a direct detection optical time division multiple access system;
FIG. 5 is a diagram of a structure of an optical transmitting device according to an embodiment of this application;
FIG. 6 is a diagram of another structure of an optical transmitting device according to an embodiment of this application;

FIG. 7 is a diagram of another structure of an optical transmitting device according to an embodiment of this application;

FIG. 8 is a diagram of a structure of an optical receiving device according to an embodiment of this application;

FIG. 9 is a diagram of an embodiment of a transmission method according to an embodiment of this application;

FIG. 10 is a diagram of a structure of a first transmission frame according to an embodiment of this application;

FIG. 11 is a diagram of a spectrum of a first sequence in time domain according to an embodiment of this application;

FIG. 12 is a diagram of a spectrum of a first sequence in frequency domain according to an embodiment of this application;

FIG. 13 is a diagram of another spectrum of a first sequence in frequency domain according to an embodiment of this application;

FIG. 14 is a diagram of another spectrum of a first sequence in frequency domain according to an embodiment of this application;

FIG. 15 is a diagram of a structure of a first sequence according to an embodiment of this application;

FIG. 16 is a diagram of a spectrum of a second sequence in frequency domain according to an embodiment of this application;

FIG. 17 is a diagram of another spectrum of a second sequence in frequency domain according to an embodiment of this application;

FIG. 18 is a diagram of distribution of correlation values obtained by performing a delay auto-correlation operation on a second sequence according to an embodiment of this application;

FIG. 19 is a diagram of a first transmission frame corresponding to a first polarization state and a second transmission frame corresponding to a second polarization state according to an embodiment of this application;

FIG. 20 is a diagram of implementing physical synchronization between an optical receiving device and an optical transmitting device according to an embodiment of this application;

FIG. 21 is a diagram of transmission between a plurality of leaf nodes and a root node according to an embodiment of this application;

FIG. 22 is a diagram of a structure of an optical transmitting device according to an embodiment of this application;

FIG. 23 is a diagram of a structure of an optical receiving device according to an embodiment of this application; and

FIG. 24 is a diagram of a structure of an optical communication device according to an embodiment of this application.

## DESCRIPTION OF EMBODIMENTS

Embodiments of this application provide a data transmission method and a related device, to implement physical synchronization between an optical transmitting device and an optical receiving device.

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by a person skilled in the art based on embodiments of the present invention without creative efforts shall fall within the protection scope of the present invention.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances, so that embodiments described herein can be implemented in other orders than the order illustrated or described herein.

An optical fiber communication system to which the method provided in this application is applied includes an optical transmitting device and an optical receiving device. The method provided in this application may be applied to an optical fiber access network, for example, a passive optical network (passive optical network, PON). The optical transmitting device may be an OLT in the PON network, and the optical receiving device may be an ONU in the PON network. Alternatively, the optical transmitting device may be an ONU in the PON network, and the optical receiving device may be an OLT in the PON network. The method provided in this application may be further applied to any network that includes an optical transmitting device and an optical receiving device that are connected via an optical fiber, for example, a metropolitan area network, a data center network, a wavelength division multiplexing network, or an optical transport network (optical transport network, OTN). For example, if the optical fiber communication system is applied to the OTN, both the optical transmitting device and the optical receiving device may be OTN devices.

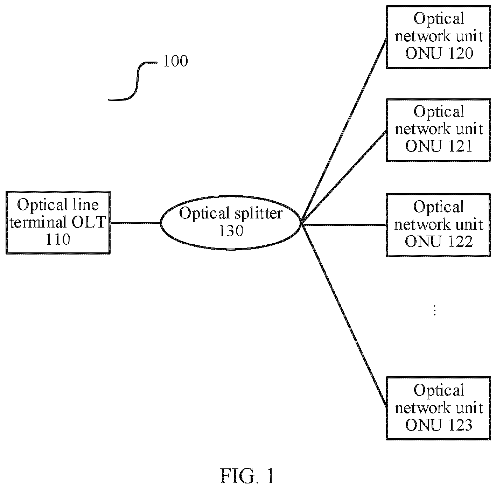

To facilitate understanding of the transmission method provided in this application, the following describes, with reference to FIG. 1 to FIG. 3, some possible structures of a communication system to which the method provided in this application is applied.

FIG. 1 is a diagram of a structure of an optical fiber communication system according to an embodiment of this application. Refer to FIG. 1. The optical fiber communication system 100 includes an OLT 110 and a plurality of ONUs, for example, an ONU 120, an ONU 121, an ONU 122, and an ONU 123 shown in FIG. 1.

It should be noted that a specific quantity of ONUs connected to the OLT 110 is not limited in this application.

In this application, the optical transmitting device may be the OLT 110 shown in FIG. 1, and the optical receiving device may be the ONU shown in FIG. 1. Alternatively, the optical transmitting device may be the ONU shown in FIG. 1, and the optical receiving device may be the OLT 110 shown in FIG. 1.

Using the OLT 110 and the ONU 120 as an example, in a transmission direction of a downlink service optical signal, the optical transmitting device is the OLT 110, and the optical receiving device is the ONU 120; and in a transmission direction of an uplink service optical signal, the optical transmitting device is the ONU 120, and the optical receiving device is the OLT 110. An optical splitter 130 is connected between the OLT 110 and the ONU 120, the OLT 110 and the optical splitter 130 are connected via an optical fiber, and the ONU 120 and the optical splitter 130 are connected via an optical fiber.

In the optical fiber communication system shown in FIG. 1, the OLT 110 may be referred to as a root node, and the ONUs may be referred to as leaf nodes. The root node is connected to the plurality of leaf nodes through a level-1 optical splitter.

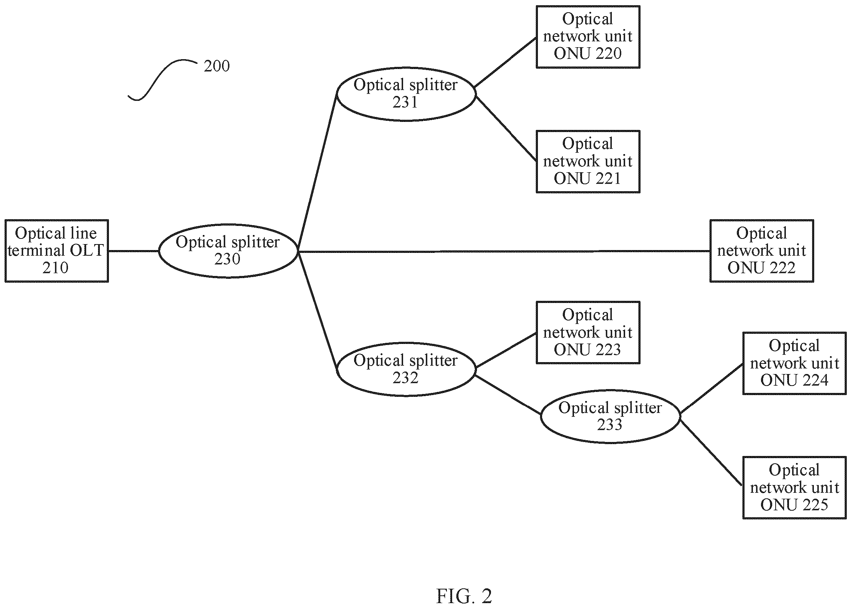

FIG. 2 is a diagram of another structure of an optical fiber communication system according to an embodiment of this application. Refer to FIG. 2. The optical fiber communication system 200 includes an OLT 210 and a plurality of ONUs, for example, an ONU 220, an ONU 221, an ONU 222, an ONU 223, an ONU 224, and an ONU 225 shown in FIG. 2.

It should be noted that a specific quantity of ONUs connected to the OLT 210 is not limited in this application.

In this application, the optical transmitting device may be the OLT 210 shown in FIG. 2, and the optical receiving device may be the ONU shown in FIG. 2. Alternatively, the optical transmitting device may be the ONU shown in FIG. 2, and the optical receiving device may be the OLT 210 shown in FIG. 2.

The OLT 210 is separately connected to an optical splitter 231, the ONU 222, and an optical splitter 232 through an optical splitter 230. The optical splitter 231 is connected to the ONU 220 and the ONU 221. The optical splitter 232 is separately connected to the ONU 223 and an optical splitter 233, and the optical splitter 233 is separately connected to the ONU 224 and the ONU 225, so that the OLT 210 is connected to the plurality of ONUs.

In the optical fiber communication system shown in FIG. 2, the OLT 210 may be referred to as a root node, and the ONUs may be referred to as leaf nodes. The root node is connected to different leaf nodes through multi-level optical splitters.

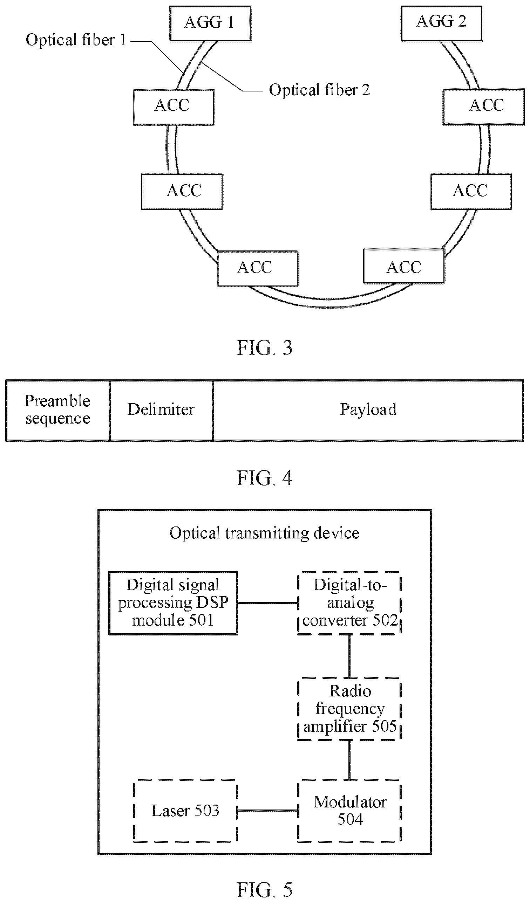

FIG. 3 is a diagram of another structure of an optical fiber communication system according to an embodiment of this application. Refer to FIG. 3. The optical fiber communication system is a typical architecture system of a metropolitan area network. The optical fiber communication system includes two root nodes and a plurality of leaf nodes. The two root nodes are an aggregation node 1 (aggregation node, AGG 1) and an AGG 2, respectively, and the plurality of leaf nodes are a plurality of access nodes (access nodes, ACCs), respectively. The two root nodes are connected to the plurality of leaf nodes via an optical fiber 1 and an optical fiber 2, as shown in FIG. 3.

When a link failure occurs on the optical fiber 1, the leaf nodes may be connected to the other root node via the optical fiber 2, to ensure that a service is not interrupted.

In FIG. 3, the root node may be understood as an optical receiving device, and the leaf node may be understood as an optical transmitting device.

In a time division multiple access system, different leaf nodes send uplink signals in different slots, and a root node needs to process signals from different leaf nodes in different slots. Because different leaf nodes have different links to the root node, parameters such as signal power and delays to the root node are significantly different. In this case, the root node first needs to complete physical synchronization between signals before entering a data processing process. Therefore, how to complete physical synchronization between signals is a problem worth considering.

Currently, the time division multiple access system includes a direct detection optical time division multiple access system and a coherent detection time division multiple access system. In the direct detection optical time division multiple access system, physical synchronization includes power synchronization and clock synchronization. In the direct detection optical time division multiple access system, physical synchronization is implemented based on an uplink physical synchronization sequence. The following describes a possible frame structure in the direct detection optical time division multiple access system. As shown in FIG. 4, the frame structure includes a preamble sequence, a delimiter, and a payload. The preamble sequence may be understood as an uplink physical synchronization sequence, and is used for clock synchronization and power synchronization. The delimiter is used for distinguishing between the preamble sequence and the payload.

It can be learned from the foregoing technical solution that, in the direct detection optical time division multiple access system, to implement physical synchronization, only the two functions: power synchronization and clock synchronization need to be completed, but in the coherent detection time division multiple access system, to implement physical synchronization, functions such as polarization diversity and channel estimation in addition to the two functions further need to be completed. Therefore, the uplink physical synchronization sequence in the direct detection optical time division multiple access system cannot be directly used in the coherent detection time division multiple access system.

How to design an uplink physical synchronization sequence in the coherent detection time division multiple access system to implement physical synchronization in the coherent detection time division multiple access system is a problem to be resolved in this application.

The following describes some possible structures of an optical transmitting device and an optical receiving device in this application.

FIG. 5 is a diagram of a structure of an optical transmitting device according to an embodiment of this application. Refer to FIG. 5. The optical transmitting device may include a digital signal processing (digital signal processing, DSP) module 501. The DSP module 501 is configured to generate a digital signal and output the digital signal. The digital signal carries a first transmission frame. For the first transmission frame, refer to the following related descriptions. For example, if the DSP module 501 is encapsulated as a DSP chip, the optical transmitting device may be a DSP chip.

Optionally, the optical transmitting device further includes a digital-to-analog converter 502, a laser 503, and a modulator 504. In this implementation, optionally, the optical transmitting device further includes a radio frequency amplifier 505.

The digital-to-analog converter 502 is configured to convert the digital signal generated by the DSP module 501 into an electrical signal, and output the electrical signal to the radio frequency amplifier 506. The radio frequency amplifier 505 is configured to amplify the electrical signal, and output an amplified electrical signal to the modulator 504.

The laser 503 generates a first optical signal, and outputs the first optical signal to the modulator 504. The modulator 504 modulates the first optical signal based on the electrical signal to obtain a second optical signal, and sends the second optical signal via an optical fiber. Compared with the first optical signal, the second optical signal has a change in a feature like strength and a phase, so that data of the first transmission frame is loaded onto the optical signal. The foregoing manner for modulating the first optical signal may be referred to as external modulation or indirect modulation.

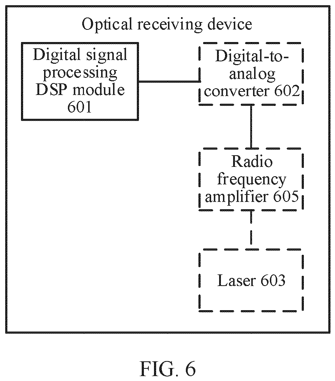

FIG. 6 is a diagram of another structure of an optical transmitting device according to an embodiment of this application. Refer to FIG. 6. The structure of the optical transmitting device shown in FIG. 6 is similar to the structure of the optical transmitting device shown in FIG. 5, and a difference lies in that a radio frequency amplifier 605 inputs an electrical signal to a laser 603. The electrical signal carries a first transmission frame, so that the laser 603 is directly driven by using the electrical signal, to load data of the first transmission frame onto an optical signal. In FIG. 6, a manner in which the laser 603 modulates the optical signal may be referred to as internal modulation or direct modulation. Then, the laser 603 sends the optical signal via an optical fiber.

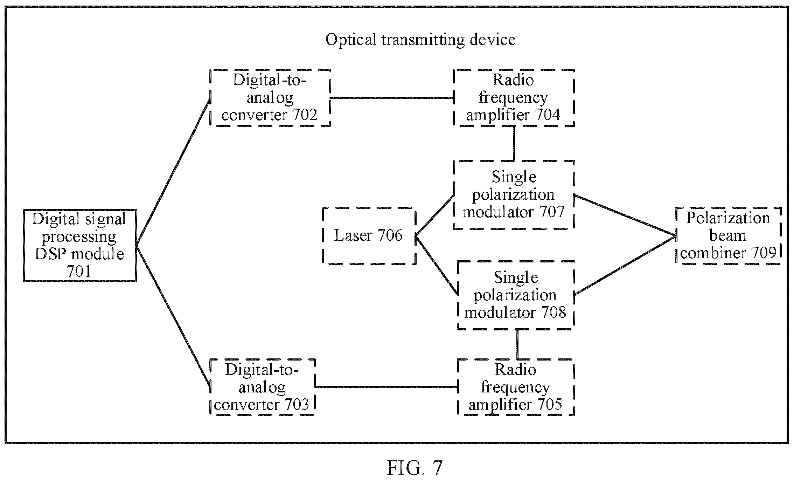

FIG. 7 is a diagram of another structure of an optical transmitting device according to an embodiment of this application. Refer to FIG. 7. The optical transmitting device includes a DSP module 701. The DSP module 701 is configured to generate a first digital signal and a second digital signal. The first digital signal carries a first transmission frame corresponding to an X polarization state. The second digital signal carries a second transmission frame corresponding to a Y polarization state. The DSP module 701 outputs the first digital signal and the second digital signal. For example, if the DSP module 701 is encapsulated as a DSP chip, the optical transmitting device may be a DSP chip. For the first transmission frame and the second transmission frame, refer to the following related descriptions.

Optionally, the optical transmitting device includes a digital-to-analog converter 702, a digital-to-analog converter 703, a laser 706, a single polarization modulator 707, a single polarization modulator 708, and a polarization beam combiner 709. In this implementation, optionally, the optical transmitting device further includes a radio frequency amplifier 704 and a radio frequency amplifier 705.

The digital-to-analog converter 702 is configured to convert the first digital signal output by the DSP module 701 into a first electrical signal, and input the first electrical signal to the radio frequency amplifier 704. The radio frequency amplifier 704 amplifies the first electrical signal, and then inputs an amplified first electrical signal to the single polarization modulator 707.

The digital-to-analog converter 703 is configured to convert the second digital signal output by the DSP module 701 into a second electrical signal, and input the second electrical signal to the radio frequency amplifier 705. The radio frequency amplifier 705 amplifies the second electrical signal, and then inputs an amplified second electrical signal to the single polarization modulator 708.

The laser 706 generates optical signals, and inputs the optical signals to the single polarization modulator 707 and the single polarization modulator 708, respectively. The single polarization modulator 707 modulates, based on the first electrical signal, the optical signal generated by the laser 706, to obtain a first optical signal, and inputs the first optical signal to the polarization beam combiner 709. The single polarization modulator 708 modulates, based on the second electrical signal, the optical signal generated by the laser 706, to obtain a second optical signal, and inputs the second optical signal to the polarization beam combiner 709. The polarization beam combiner 709 combines the first optical signal and the second optical signal into a third optical signal, and transmits the third optical signal via an optical fiber.

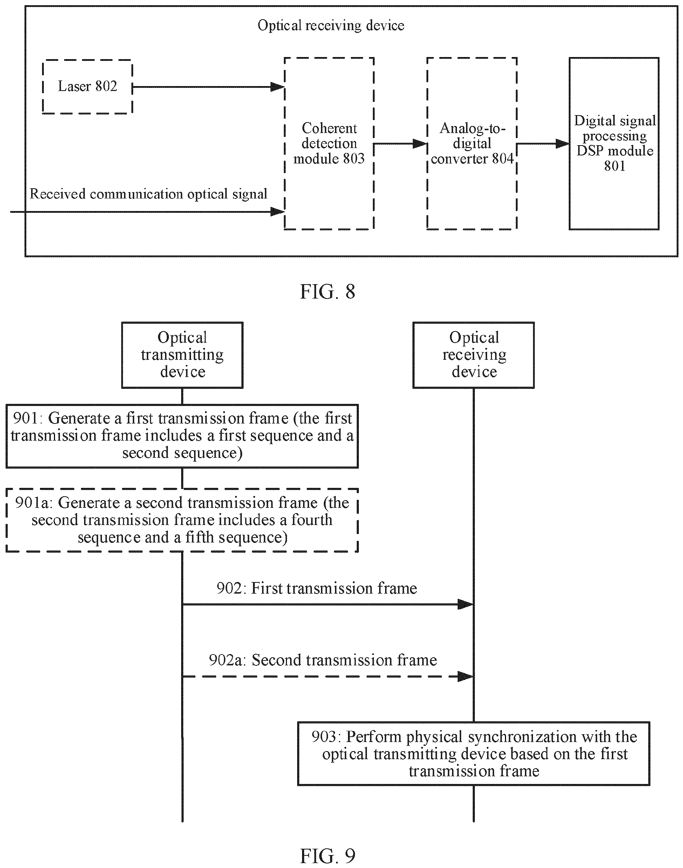

FIG. 8 is a diagram of a structure of an optical receiving device according to an embodiment of this application. Refer to FIG. 8. The optical receiving device includes a DSP module 801. The DSP module 801 receives a digital signal, and the digital signal carries a first transmission frame. Then, the DSP module 801 implements physical synchronization between an optical transmitting device and the optical receiving device through the first transmission frame, and restores data carried in the first transmission frame. The DSP module 801 may be encapsulated as a DSP chip, so that the optical receiving device can be a DSP chip.

Optionally, the optical receiving device further includes a laser 802, a coherent detection module 803, and an analog-to-digital converter 804.

The laser 802 generates a local oscillator optical signal, and outputs the local oscillator optical signal to the coherent detection module 803. The coherent detection module 803 processes the local oscillator optical signal and a received communication optical signal to obtain an electrical signal. In a single polarization state scenario, the communication optical signal carries a first transmission frame. In a dual polarization state scenario, the communication optical signal carries a first transmission frame corresponding to a first polarization state and a second transmission frame corresponding to a second polarization state. For the first transmission frame and the second transmission frame, refer to the following related descriptions. The coherent detection module 803 outputs the electrical signal to the analog-to-digital converter 804. The analog-to-digital converter 804 converts the electrical signal into a digital signal, and outputs the digital signal to the DSP 801. For a related processing process of the DSP 801, refer to the foregoing descriptions.

Optionally, the DSP 801 further has a polarization diversity function. To be specific, the DSP 801 may restore data transmitted in different polarization states.

The following describes the technical solutions of this application with reference to specific embodiments.

FIG. 9 is a diagram of an embodiment of a transmission method according to an embodiment of this application. Refer to FIG. 9. The method includes the following steps.

901: An optical transmitting device generates a first transmission frame, where the first transmission frame includes a first sequence and a second sequence.

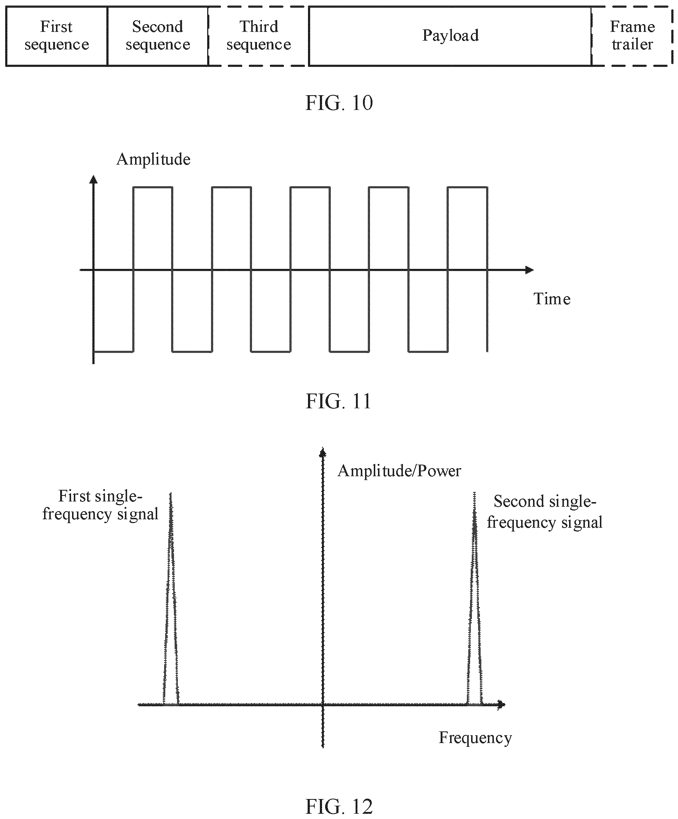

For example, FIG. 10 is a diagram of a structure of the first transmission frame. As shown in FIG. 10, the first transmission frame includes a first sequence, a second sequence, and a payload.

The first sequence corresponds to a first single-frequency signal and a second single-frequency signal in frequency domain. A frequency of the first single-frequency signal is fixed in a first time period, a frequency of the second single-frequency signal is fixed in the first time period, and the frequency of the first single-frequency signal and the frequency of the second single-frequency signal are different in the first time period. The first time period is at least a part of a time period in which the optical transmitting device sends the first sequence.

A difference between signal amplitudes of a frequency-domain signal corresponding to the second sequence in frequency domain at any two frequencies in first bandwidth is less than a first threshold, or a difference between signal amplitudes of a frequency -domain signal corresponding to the second sequence in frequency domain at any two frequencies other than a frequency 0 in first bandwidth is less than a first threshold. The first bandwidth is bandwidth used by the optical transmitting device to send the first transmission frame.

The following separately describes the first sequence from a perspective of time domain and a perspective of frequency domain.

From a perspective of time domain, optionally, the first sequence includes a plurality of repetitions of a plurality of symbols, and the plurality of symbols are different. For example, the first sequence may include a plurality of repetitions of [A, B], a plurality of repetitions of [A, A, B, B], a plurality of repetitions of [A, A, A, B, B, B], or a plurality of repetitions of [A, B, C, D]. A, B, C, and D are different symbols. A quantity of the plurality of symbols may be any even number of symbols such as two symbols, four symbols, or six symbols.

For example, the symbol A is -1, the symbol B is 1, and the first sequence is a plurality of repetitions of [-1, 1]. FIG. 11 is a diagram of a spectrum of the first sequence in time domain. As shown in FIG. 11, an amplitude of a time-domain signal (which may also be referred to as power of the time-domain signal) corresponding to the first sequence in time domain is related to a value of the symbol A and a value of the symbol B. For example, if A is -3, and B is 3, the amplitude of the time-domain symbol corresponding to the first sequence in time domain shown in FIG. 11 is tripled.

The following describes a diagram of a spectrum of the first sequence in frequency domain by using an example in which the first sequence includes a plurality of repetitions of [A, B].

FIG. 12 is a diagram of a spectrum of the first sequence in frequency domain in the method provided in this application. Refer to FIG. 12. In the first sequence, B is equal to -A. It can be learned from FIG. 12 that the first sequence corresponds to a first single-frequency signal and a second single-frequency signal in frequency domain. A first time period is the whole of a time period in which the optical transmitting device sends the first sequence. A frequency $f_a$ of the first single-frequency signal is fixed in the first time period, and a frequency $f_b$ of the second single-frequency signal is fixed in the first time period. The frequency of the first single-frequency signal and the frequency of the second single-frequency signal are different in the first time period. In other words, $f_a$ is not equal to $f_b$.

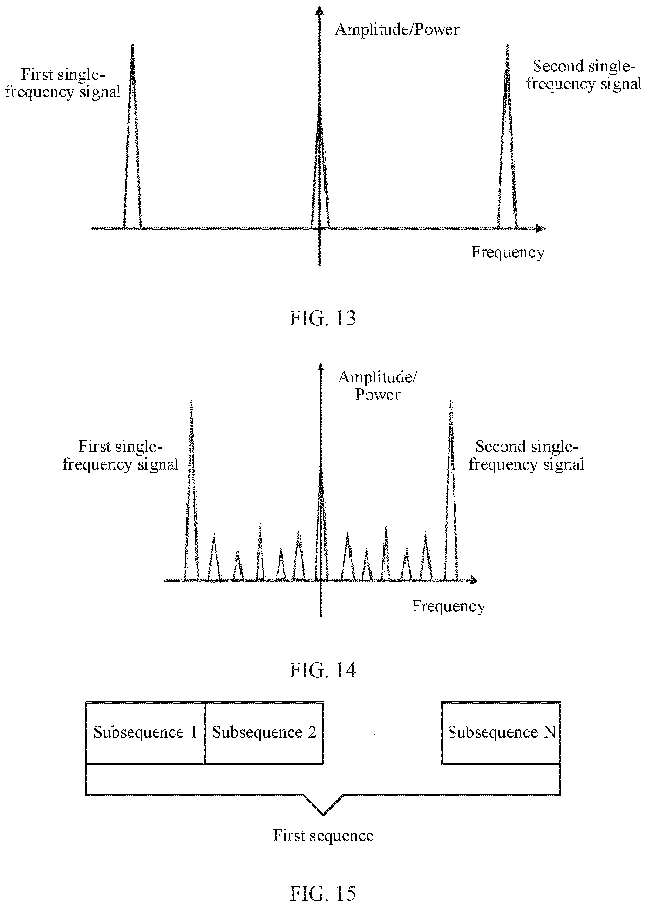

If B is not equal to -A, the diagram of the spectrum of the first sequence in frequency domain may be shown in FIG. 13 or FIG. 14. FIG. 13 is a diagram of another spectrum of the first sequence in frequency domain according to an embodiment of this application. Refer to FIG. 13. The first sequence corresponds to a first single-frequency signal and a second single-frequency signal in frequency domain. The first sequence further corresponds to a signal whose frequency is 0 in frequency domain.

If B is not equal to -A, and there is another non-ideal impairment like truncation, symbol missing, and a device response impairment, FIG. 14 is a diagram of another spectrum of the first sequence in frequency domain according to an embodiment of this application. Refer to FIG. 14. The first sequence corresponds to a first single-frequency signal and a second single-frequency signal in frequency domain, and further corresponds to a signal in another frequency (due to interference, noise, or the like).

Optionally, the optical transmitting device determines the first sequence based on a modulation format of the first transmission frame.

The modulation format of the first transmission frame is a format used by a modulator to modulate the first transmission frame. Specifically, the modulator may belong to the optical transmitting device, or may not belong to the optical transmitting device. This is not specifically limited in this application. For a structure of the optical transmitting device, refer to the foregoing related descriptions.

For example, if the modulation format of the first transmission frame is BPSK, the first sequence may include at least one of the following: a plurality of repetitions of [A, B], a plurality of repetitions of [A, A, B, B], or a plurality of repetitions of [A, A, A, B, B, B]. A is equal to 1, and B is equal to -1; or A is equal to -1, and B is equal to 1.

For example, if the modulation format of the first transmission frame is 4ASK, the first sequence may include at least one of the following: a plurality of repetitions of [A, B], a plurality of repetitions of [A, A, B, B], or a plurality of repetitions of [A, A, A, B, B, B]. Values of A and B may be obtained from [-3, -1, 1, 3]. For example, A is equal to -1, and B is equal to 1; or A is equal to 1, and B is equal to -1; or A is equal to -3, and B is equal to 3; or A is equal to 3, and B is equal to -3.

For example, if the modulation format of the first transmission frame is QPSK, the first sequence may include at least one of the following: a plurality of repetitions of [A, B], a plurality of repetitions of [A, A, B, B], a plurality of repetitions of [A, A, A, B, B, B], or a plurality of repetitions of [A, B, C, D]. A, B, C, and D are different symbols. Values of A, B, C, and D may be obtained from [1+j, 1-j, -1-j, -1+j].

For example, if the modulation format of the first transmission frame is 16QAM, the first sequence may include at least one of the following: a plurality of repetitions of [A, B], a plurality of repetitions of [A, A, B, B], a plurality of repetitions of [A, A, A, B, B, B], a plurality of repetitions of [A, B, C, D], a plurality of repetitions of a[A, B], a plurality of repetitions of a[A, A, B, B], or a plurality of repetitions of a[A, A, A, B, B, B]. Values of A, B, C, and D may be obtained from [1+j, 2+j, 1+2j, 2+2j, -1+j, -2+j, -1+2j, -2+2j, 1-j, 1-2j, 2-j, 2-2j, -1-j, -1-2j, -2-j, -2-2j]. A value of a may be 3+3j, 3-3j, -3-3j, or -3+3j.

For example, if the modulation format of the first transmission frame is 16QAM, the first sequence may be (3+3j)*[1, -1, 1, -1, 1, -1, 1, -1, 1, -1, 1, -1, 1, -1, 1, -1], (3-3j)*[1, -1, 1, -1, 1, -1, 1, -1, 1, -1, 1, -1, 1, -1, 1, -1], (-3-3j)*[1, -1, 1, -1, 1, -1, 1, -1, 1, -1, 1, -1, 1, -1, 1, -1], or (-3+3j)*[1, -1, 1, -1, 1, -1, 1, -1, 1, -1, 1, -1, 1, -1].

For example, the modulation format of the first transmission frame is BPSK, 4ASK, or 8ASK. The first sequence includes a plurality of repetitions of [1, -1], the frequency of the first single-frequency signal corresponding to the first sequence in frequency domain is a half of a negative baud rate, and the frequency of the second single-frequency signal corresponding to the first sequence in frequency domain is a half of a baud rate. For example, the first sequence includes a plurality of repetitions of [1, 1, -1, -1], the frequency of the first single-frequency signal corresponding to the first sequence in frequency domain is a quarter of a negative baud rate, and the frequency of the second single-frequency signal corresponding to the first sequence in frequency domain is a quarter of a baud rate.

In a possible implementation, the optical transmitting device may select the frequency $f_a$ of the first single-frequency signal and the frequency $f_b$ of the second single-frequency signal in frequency domain. Then, the optical transmitting device uses the frequency $f_a$ and the frequency $f_b$ as a frequency of a frequency-domain signal corresponding to the first sequence in frequency domain, sets the frequency to a valid value, and sets another frequency to zero. Next, the optical transmitting device performs inverse Fourier transform to time domain, and maps a time-domain signal to a sequence in the modulation format based on a modulation format of the modulator, to obtain the first sequence.

Optionally, the first sequence includes 128 symbols, 160 symbols, or 192 symbols.

A factor considered in designing a length of the first sequence includes at least one of the following: a channel impairment degree or a DSP capability of an optical receiving device.

Optionally, frequency spacing between the frequency of the first single-frequency signal and a reference frequency is equal to frequency spacing between the frequency of the second single-frequency signal and the reference frequency.

In a possible implementation, the reference frequency is a carrier center frequency, and the carrier center frequency is a center frequency of a carrier that carries the first transmission frame.

For example, as shown in FIG. 12, the reference frequency is a carrier center frequency 0, and frequency spacing between the frequency of the first single-frequency signal and the carrier center frequency is equal to frequency spacing between the frequency of the second single-frequency signal and the carrier center frequency.

Optionally, the first sequence includes N subsequences, and each of the N subsequences corresponds to one time period. The optical transmitting device outputs a subsequence in a time period corresponding to the subsequence, where N is an integer greater than or equal to 2.

In this implementation, the first time period is one of the N time periods corresponding to the N subsequences.

The optical transmitting device sends, in the first time period, a subsequence corresponding to the first time period. In other words, the first time period is a part of a time period in which the optical transmitting device sends the first sequence.

For example, as shown in FIG. 15, if the length of the first sequence is $N_0$, and a length of an $i^{th}$ subsequence in the N subsequences is $N_i$, it can be learned that $\sum_{i=1}^{N} N_i = N_0$.

Optionally, a frequency of the first single-frequency signal in any one of the N time periods is fixed, and a frequency of the second single-frequency signal in any one of the N time periods is fixed. A frequency of the first single-frequency signal and a frequency of the second single-frequency signal are different in a same time period.

A diagram of a spectrum of a subsequence corresponding to any one of the N time periods in frequency domain may be the diagrams of a spectrum shown in FIG. 12 to FIG. 14.

It should be noted that frequencies of the first single-frequency signal in any two adjacent time periods of the N time periods are not equal, and frequencies of the second single-frequency signal in any two adjacent time periods of the N time periods are not equal.

For example, the modulation format of the first transmission frame is BPSK, 4ASK, or 8ASK. For a subsequence i corresponding to an $i^{th}$ time period in the N time periods, the subsequence i includes a plurality of repetitions of [1, -1], and a subsequence i+1 includes a plurality of repetitions of [1, 1, -1, -1]. A frequency of the first single-frequency signal corresponding to the subsequence i in frequency domain is a half of a negative baud rate, and a frequency of the second single-frequency signal corresponding to the subsequence i in frequency domain is a half of a baud rate. A frequency of the first single-frequency signal corresponding to the subsequence i+1 in frequency domain is a quarter of a negative baud rate, and a frequency of the second single-frequency signal corresponding to the subsequence i+1 in frequency domain is a quarter of a baud rate. In other words, the frequency of the first single-frequency signal corresponding to the subsequence 1 in frequency domain and the frequency of the first single-frequency signal corresponding to the subsequence i+1 in frequency domain are different. The frequency of the second single-frequency signal corresponding to the subsequence 1 in frequency domain and the frequency of the second single-frequency signal corresponding to the subsequence i+1 in frequency domain are different.

The following describes a frequency domain feature and a delay auto-correlation feature of the second sequence.

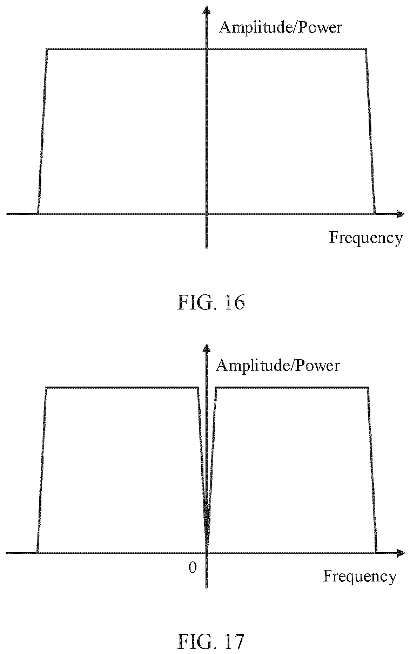

FIG. 16 is a diagram of a spectrum of the second sequence in frequency domain according to an embodiment of this application. Refer to FIG. 16. A difference between signal amplitudes or signal power of a frequency-domain signal corresponding to the second sequence in frequency domain at any two frequencies in first bandwidth is less than a first threshold. For example, the first threshold may be 2 dB (decibel).

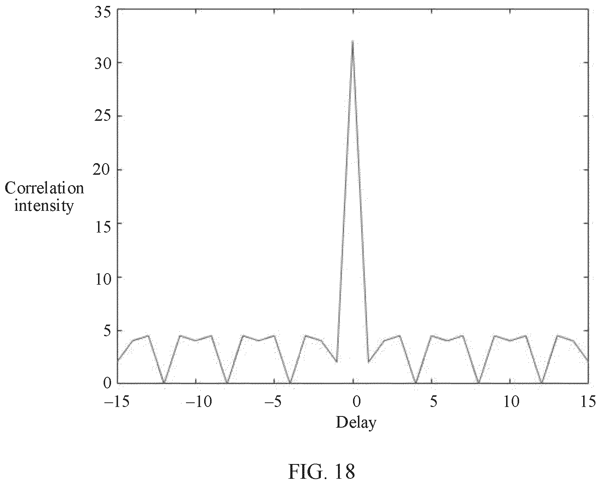

As shown in FIG. 16, signal amplitudes of the frequency-domain signal at different frequencies are flat, and a reflected delay auto -correlation feature is as follows: In correlation values obtained by performing a delay auto-correlation operation on the second sequence, a corresponding correlation value when a delay is 0 is the largest, and a difference between a corresponding correlation value when the delay is not 0 and the corresponding correlation value when the delay is 0 is less than or equal to a second threshold. For example, the second threshold is 1/2 or 1/4. In other words, the corresponding correlation value when the delay is not 0 is far less than the corresponding correlation value when the delay is 0. For example, FIG. 18 is a diagram of correlation values obtained by performing a delay auto-correlation operation on the second sequence. The corresponding correlation value when the delay is not 0 is 1/2 or 1/4 of the corresponding correlation value when the delay is 0.

Optionally, a frequency range corresponding to the first bandwidth is represented as [-$f_1$, $f_1$], and the any two frequencies fall within a frequency range [-$f_1$/L, $f_1$/L], where L is an integer greater than or equal to 2.

The signal amplitudes of the frequency-domain signal corresponding to the second sequence in the first transmission frame received by the optical receiving device in frequency domain are basically the same at the any two frequencies in the frequency range [-$f_1$/L, $f_1$/L]. For another frequency range, a difference between signal amplitudes of the frequency-domain signal in the another frequency range may be large due to interference in a transmission process or impact of some other factors.

FIG. 17 is a diagram of a spectrum of the second sequence in frequency domain according to an embodiment of this application. Refer to FIG. 17. A difference between signal amplitudes or signal power of a frequency-domain signal corresponding to the second sequence in frequency domain at any two frequencies other than a frequency 0 in first bandwidth is less than a first threshold. For example, the first threshold may be 2 dB (decibel).

As shown in FIG. 17, signal amplitudes of the frequency-domain signal at different frequencies in a frequency range [-$f_1$, 0) and/or (0, $f_1$] are flat, and a reflected delay cross-correlation feature is as follows: In correlation values obtained by performing a delay auto-correlation operation on the second sequence, a corresponding correlation value when a delay is 0 is the largest, and a corresponding correlation value when the delay is not 0 is far less than the corresponding correlation value when the delay is 0. For example, FIG. 18 is a diagram of correlation values obtained by performing a delay auto-correlation operation on the second sequence. The corresponding correlation value when the delay is not 0 is 1/2 or 1/4 of the corresponding correlation value when the delay is 0.

It should be noted that, optionally, the first threshold may be designed based on at least one of the following factors: device performance of the optical receiving device or a channel frequency response.

In an ideal case, the signal amplitudes of the frequency -domain signal corresponding to the second sequence in frequency domain at different frequencies are the same. However, due to impact of the device performance of the optical receiving device and the channel frequency response, a measurement deviation exists when the optical receiving device performs detection. Therefore, the first threshold may be set with reference to the device performance of the optical receiving device and the channel frequency response.

Optionally, a frequency range corresponding to the first bandwidth is represented as $[-f_1, f_1]$, and the any two frequencies fall within a frequency range $[-f_1/L, 0]$ and/or a frequency range $(0, f_1/L]$, where L is an integer greater than or equal to 2.

The signal amplitudes of the frequency-domain signal corresponding to the second sequence in the first transmission frame received by the optical receiving device in frequency domain are basically the same at the any two frequencies in the frequency range $[-f_1/L, 0)$ and/or the frequency range $(0, f_1/L]$. For another frequency range, a difference between signal amplitudes of the frequency-domain signal in the another frequency range may be large due to interference in a transmission process or impact of some other factors.

Optionally, the second sequence is a constant modulus orthogonal sequence. For example, the second sequence includes at least one of the following: an M sequence, a Gold sequence, and a CAZAC sequence. For example, the CAZAC sequence may be a Zadoff-Chu sequence. Zadoff and Chu are personal names, and the Zadoff-Chu sequence may also be referred to as a ZC sequence for short.

It should be noted that, optionally, cross-correlation between different constant modulus orthogonal sequences is poor. Therefore, different optical transmitting devices use different constant modulus orthogonal sequences as second sequences, so that the optical receiving device can distinguish between the different optical transmitting devices by using delay auto-correlation peaks of the second sequences.

Optionally, a quantity of symbols included in the second sequence is an integer multiple of 16 or 24.

For example, the second sequence includes 16 symbols, 24 symbols, 32 symbols, 48 symbols, 64 symbols, 80 symbols, 96 symbols, 112 symbols, or 128 symbols.

Optionally, a factor considered in designing a length of the second sequence includes at least one of the following: a channel impairment or a DSP capability of the optical receiving device.

Optionally, the second sequence includes M subsequences. At least one subsequence in the M subsequences satisfies the following condition: a difference between signal amplitudes of a frequency-domain signal corresponding to the subsequence in frequency domain at any two frequencies in the first bandwidth is less than the first threshold, or a difference between signal amplitudes of a frequency-domain signal corresponding to the subsequence in frequency domain at any two frequencies other than a frequency 0 in the first bandwidth is less than the first threshold. M is an integer greater than or equal to 2. For details about a frequency domain feature and a delay auto-correlation feature of the subsequence, refer to the foregoing related descriptions of the second sequence.

For example, if the length of the second sequence is $K_0$, and a length of a jth subsequence in the M subsequences is $K_j$, it can be learned that $\sum_{j=1}^{M} K_j = K_0$.

Optionally, each of the M subsequences may be a constant modulus orthogonal sequence.

Optionally, the jth subsequence in the M subsequences is a subsequence obtained by performing symbol shift on an hth subsequence. j and h both are integers greater than or equal to 1 and less than or equal to M.

For example, the jth subsequence is a subsequence obtained by shifting a symbol in the hth subsequence rightwards by two symbol positions.

Optionally, the payload of the first transmission frame includes a first preamble sequence, and the first preamble sequence is used for assisting in carrier recovery.

Optionally, the first transmission frame further includes a third sequence. For example, as shown in FIG. 10, the first transmission frame further includes the third sequence.

In this implementation, a length of the third sequence is determined based on a length of the first transmission frame, a length of the payload, the length of the first sequence, and the length of the second sequence.

For example, if a total length of the payload, the first sequence, and the second sequence is L1, and the length of the first transmission frame is specified as L2 in a communication protocol or a system, the length of the third sequence is L2-L1.

Optionally, the first transmission frame further includes a frame trailer, and the frame trailer indicates that the first transmission frame ends.

In this implementation, the length of the third sequence is determined based on the length of the first transmission frame, the length of the payload, the length of the first sequence, the length of the second sequence, and a length of the frame trailer.

In a possible implementation, the third sequence may be any sequence.

In another possible implementation, the third sequence has the frequency domain feature and the delay auto-correlation feature of the second sequence. For example, the third sequence may be the second sequence, or the third sequence includes a plurality of repetitions of the second sequence, or the third sequence is a sequence obtained by performing a shift operation on the second sequence, or the third sequence is a sequence that is generated according to another rule and that has the frequency domain feature and the delay auto-correlation feature of the second sequence. This is not specifically limited in this application.

Optionally, a total quantity of symbols included in the first sequence, the second sequence, and the third sequence is less than 288. It can be learned that, in the technical solutions of this application, a sequence used for physical synchronization is short, and therefore physical layer overheads are small, and channel utilization is high. Further, a total length of the first sequence, the second sequence, and the third sequence is short. This helps the optical receiving device quickly complete physical synchronization with the optical transmitting device, implements fast recovery of uplink data sent by the optical transmitting device, and ensures uplink transmission performance of a point-to-multipoint communication system.

For functions of the first sequence, the second sequence, and the third sequence, refer to related descriptions of step 903.

Optionally, in a multi-polarization state scenario, the first transmission frame is a transmission frame corresponding to a first polarization state, and the embodiment shown in FIG. 9 further includes step 901a. It should be noted that a sequence of performing step 901a and step 901 is not fixed. Step 901 is performed before step 901a; or step 901a is performed before step 901; or step 901 and step 901a are simultaneously performed as required. This is not specifically limited in this application.

901a: The optical transmitting device generates a second transmission frame corresponding to a second polarization state, where the second transmission frame includes a fourth sequence and a fifth sequence.

For example, the first polarization state is an X polarization state, and the second polarization state is a Y polarization state.

The following describes two possible implementations of the fourth sequence.

Implementation 1: The fourth sequence may be a blank sequence, in other words, no signal is loaded onto the fourth sequence.

Implementation 2: The fourth sequence corresponds to a third single-frequency signal and a fourth single-frequency signal in frequency domain. A frequency of the third single-frequency signal is fixed in the first time period, and a frequency of the fourth single-frequency signal is fixed in the first time period. The frequency of the third single-frequency signal and the frequency of the fourth single-frequency signal are different in the first time period.

The fourth sequence has a feature similar to that of the first sequence. For details, refer to the foregoing related descriptions of the first sequence. In Implementation 2, physical synchronization performance of the optical receiving device is improved, and data sent by the optical transmitting device is better restored.

Optionally, when the fourth sequence corresponds to the third single-frequency signal and the fourth single-frequency signal in frequency domain, the frequency of the third single-frequency signal and the frequency of the first single-frequency signal are equal or not equal in the first time period, and the frequency of the fourth single-frequency signal and the frequency of the second single-frequency signal are equal or not equal in the first time period.

A difference between signal amplitudes of a frequency -domain signal corresponding to the fifth sequence in frequency domain at any two frequencies in second bandwidth is less than a first threshold, or a difference between signal amplitudes of a frequency -domain signal corresponding to the fifth sequence in frequency domain at any two frequencies other than a frequency 0 in second bandwidth is less than a first threshold. The second bandwidth is bandwidth used by the optical transmitting device to send the second transmission frame.

It should be noted that, optionally, the second bandwidth and the first bandwidth are same bandwidth.

The following describes a plurality of possible implementations of the fifth sequence.

Implementation 1: The fifth sequence is any sequence. For example, any signal is loaded onto the fifth sequence. Alternatively, the fifth sequence is a blank sequence, in other words, no signal is loaded onto the fifth sequence.

Implementation 2: The fifth sequence includes at least one of the following: the second sequence, a plurality of repetitions of the second sequence, a sequence obtained by performing symbol shift on the second sequence, or a plurality of repetitions of the sequence obtained by performing symbol shift on the second sequence.

Implementation 3: The fifth sequence has a frequency domain feature and a delay auto-correlation feature similar to those of the second sequence, but the fifth sequence is not correlated with the second sequence. For example, the fifth sequence and the second sequence are different constant modulus orthogonal sequences.

In Implementation 2 or Implementation 3, physical synchronization performance of the optical receiving device is improved, and data sent by the optical transmitting device is better restored.

Optionally, the second transmission frame further includes a sixth sequence. For the sixth sequence, refer to the foregoing related descriptions of the third sequence. Details are not described herein again.

Optionally, a start time domain position of the first transmission frame and a start time domain position of the second transmission frame are the same, and the length of the first sequence and a length of the fourth sequence are the same. In other words, the first sequence is aligned with the fourth sequence. The length of the second sequence and a length of the fifth sequence are the same. In other words, the second sequence is aligned with the fifth sequence.

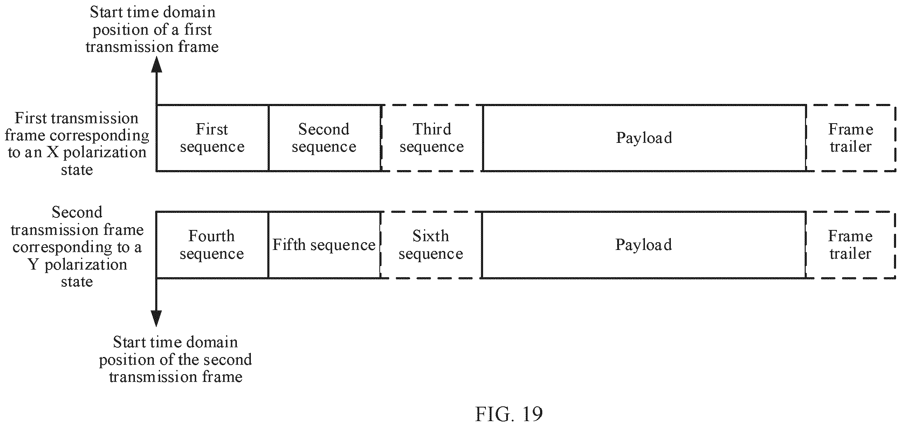

For example, as shown in FIG. 19, a start time domain position of the first transmission frame corresponding to the X polarization state is aligned with a start time domain position of the second transmission frame corresponding to the Y polarization state. The first sequence is aligned with the fourth sequence, and the second sequence is aligned with the fifth sequence. This helps the optical receiving device better perform physical synchronization, and improves synchronization performance. Further, the first transmission frame corresponding to the X polarization state and the second transmission frame corresponding to the Y polarization state are transmitted in alignment, improving system bandwidth utilization.

902: The optical transmitting device sends the first transmission frame to the optical receiving device. Correspondingly, the optical receiving device receives the first transmission frame from the optical transmitting device.

Optionally, based on step 901a, the embodiment shown in FIG. 9 further includes step 902a.

902a: The optical transmitting device sends the second transmission frame to the optical receiving device. Correspondingly, the optical receiving device receives the second transmission frame from the optical transmitting device.

For example, as shown in FIG. 7, the laser 706 in the optical receiving device generates optical signals, and inputs the optical signals to the single polarization modulator 707 and the single polarization modulator 708. The single polarization modulator 707 modulates the optical signal based on a first electrical signal (namely, the first transmission frame), to obtain a first optical signal, and inputs the first optical signal to the polarization beam combiner 709. The single polarization modulator 708 modulates the optical signal based on a second electrical signal (namely, the second transmission frame), to obtain a second optical signal, and inputs the second optical signal to the polarization beam combiner 709. Then, the polarization beam combiner 709 combines the first optical signal and the second optical signal into a third optical signal, and transmits the third optical signal to the optical receiving device.

903: The optical receiving device performs physical synchronization with the optical transmitting device based on the first transmission frame.

The first transmission frame includes the first sequence and the second sequence. The first sequence is used by the optical receiving device to perform at least one of the following: signal detection, polarization diversity, clock recovery, or frequency offset estimation. The second sequence is used by the optical receiving device to perform at least one of the following: framing, channel estimation, or fine frequency offset estimation.

Optionally, the first transmission frame further includes the third sequence. The third sequence is used for matching the length of the first transmission frame. Optionally, the third sequence is used for assisting the optical receiving device in performing channel estimation. For example, when a channel condition is poor, the third sequence may be used for assisting in completing channel estimation.

For features of the first sequence, the second sequence, and the third sequence, refer to the foregoing related descriptions.

The following shows recommended lengths, main functions, and auxiliary functions of the first sequence, the second sequence, and the third sequence in Table 1.

Table 1

| Sequence | Recommended length | Main function | Auxiliary function |
|---|---|---|---|
| First sequence | 160 symbols | Signal detection, polarization diversity (in a multi-polarization state scenario), clock recovery, and frequency offset estimation | |
| Second sequence | 64 symbols or 128 symbols | Framing and channel estimation | Frequency offset estimation and identification of the optical transmitting device (for example, an ONU) |
| Third sequence | Flexibly configured (to match the length of the first transmission frame) | Match the length of the first transmission frame | Channel estimation |

For example, in the optical receiving device shown in FIG. 5, FIG. 6, or FIG. 7, the DSP module implements physical synchronization between the optical receiving device and the optical transmitting device through the first transmission frame. Then, the optical receiving device may restore the data carried in the first transmission frame.

Optionally, based on step 902 and step 902a, step 903 specifically includes:

The optical receiving device performs physical synchronization with the optical transmitting device based on the first transmission frame and the second transmission frame.

For example, in a dual polarization state, the optical receiving device may select a transmission frame with higher power and a better signal-to-noise ratio from the first transmission frame and the second transmission frame, and perform physical synchronization with the optical transmitting device through the transmission frame. Alternatively, the optical receiving device may perform physical synchronization with the optical transmitting device through both the first transmission frame and the second transmission frame.

The following describes a process in which the optical receiving device performs physical synchronization with the optical transmitting device through the first transmission frame.

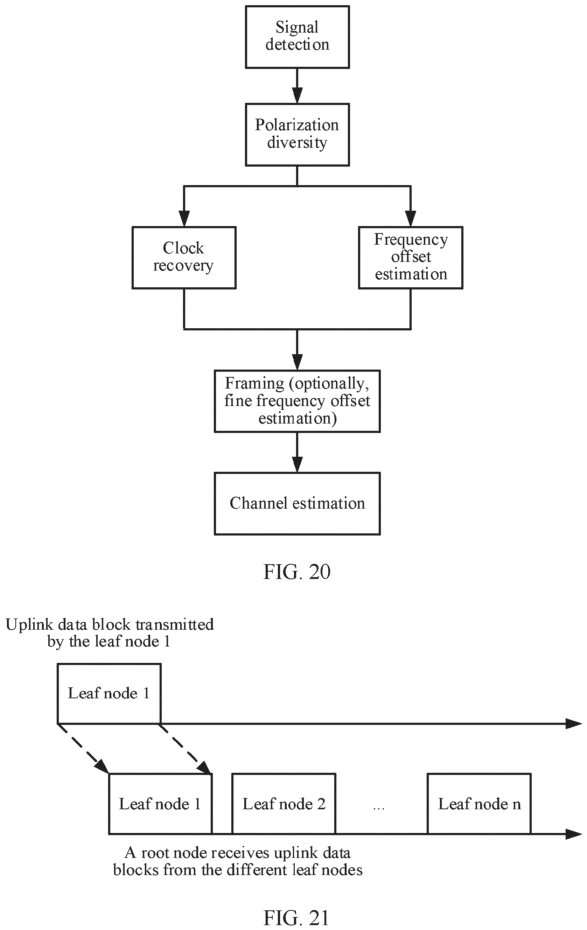

For example, as shown in FIG. 20, the optical receiving device detects, based on the first sequence, whether there is a valid signal that arrives at the optical receiving device. After the optical receiving device determines that there is a valid signal that arrives at the optical receiving device, the optical receiving device completes polarization diversity based on the first sequence in the first transmission frame and the fourth sequence in the second transmission frame. Then, the optical receiving device performs clock recovery and frequency offset estimation based on the first sequence in the first transmission frame and/or the fourth sequence in the second transmission frame. The optical receiving device may perform framing based on the second sequence in the first transmission frame and/or the fifth sequence in the second transmission frame. The optical receiving device may compensate for the second sequence in the first transmission frame based on a frequency offset estimation result, and perform channel estimation based on the second sequence that is compensated for. Optionally, the optical receiving device may perform fine frequency offset estimation based on the second sequence in the first transmission frame and/or the fifth sequence in the second transmission frame. The optical receiving device performs channel estimation based on the third sequence. In this way, physical synchronization is implemented between the optical receiving device and the optical transmitting device. Then, the optical receiving device restores the data carried in the first transmission frame.

The following describes some physical synchronization functions implemented by the optical receiving device based on the first sequence in the first transmission frame and/or the fourth sequence in the second transmission frame.

1. Signal detection:

For example, the optical receiving device may implement signal detection by using a time domain detection method or a frequency domain detection method. Another signal detection method is still applicable to this application. The following example does not constitute a limitation on this application. The following separately describes the time domain detection method and the frequency domain detection method.

The time domain detection method includes: The optical receiving device performs delay correlation on the first sequence in the first transmission frame and a preset first sequence to obtain a plurality of delay correlation values. The optical receiving device determines whether a maximum delay correlation value in the plurality of delay correlation values is greater than a preset threshold, and if yes, it indicates that the optical receiving device receives a signal.

The frequency domain detection method includes: The optical receiving device performs Fourier transform on the first sequence in the received first transmission frame to obtain the first single-frequency signal and the second single-frequency signal. The optical receiving device determines a first ratio of power of the first single-frequency signal to power of a signal of another frequency, and/or a second ratio of power of the second single-frequency signal to power of a signal of another frequency. If the first ratio is greater than the preset threshold, and/or the second ratio is greater than the preset threshold, it indicates that the optical receiving device receives a signal.

2. Polarization diversity: The following shows some possible implementations in which the optical receiving device implements polarization diversity through the first transmission frame and the second transmission frame. Another implementation is also applicable. This is not limited in this application.

For example, the optical receiving device may determine a power ratio between an X polarization state signal (carrying the first transmission frame) and a Y polarization state signal (carrying the second transmission frame) received by the optical receiving device, and a phase difference between the X polarization state signal and the Y polarization state signal. Then, the optical receiving device determines a polarization angle and a polarization phase of an X polarization state, and a polarization angle and a polarization phase of a Y polarization state based on the power ratio and the phase difference.

For example, the optical receiving device may separately multiply the first single-frequency signal by a conjugate signal of the first single-frequency signal and a conjugate signal of the second single-frequency signal, to obtain a first calculation result. The optical receiving device separately multiplies the second single-frequency signal by the conjugate signal of the first single-frequency signal and the conjugate signal of the second single-frequency signal, to obtain a second calculation result. The optical receiving device determines the polarization angle and the polarization phase of the X polarization state, and the polarization angle and the polarization phase of the Y polarization state based on the first calculation result and the second calculation result.

3. Clock recovery: The following describes some possible implementations in which the optical receiving device determines clock deviation based on the first sequence, and aligns clock frequencies between the optical transmitting device and the optical receiving device based on the clock deviation. Another implementation is still applicable to this application. The following example does not constitute a limitation on this application.

For example, the optical receiving device may determine a phase difference between the first single-frequency signal and the second single-frequency signal. The optical receiving device determines frequency spacing between the frequency of the first single-frequency signal and the frequency of the second single-frequency signal, and performs normalization on the frequency spacing. Then, the optical receiving device determines the clock deviation between the optical transmitting device and the optical receiving device based on the phase difference and the frequency spacing on which normalization is performed. The optical receiving device aligns the clock frequencies between the optical transmitting device and the optical receiving device based on the clock deviation.

For example, the optical receiving device determines the clock deviation between the optical transmitting device and the optical receiving device based on a time-domain phase detection algorithm and the first sequence. For example, the time-domain phase detection algorithm may be a Mueller-Muller (Mueller-Muller, MM) algorithm or a Gardner (Gardner) algorithm. Then, the optical receiving device aligns the clock frequencies between the optical transmitting device and the optical receiving device based on the clock deviation.

4. Frequency offset estimation: The following describes some possible implementations in which the optical receiving device determines frequency deviation based on the first sequence, and compensates for a frequency difference between a laser of the optical transmitting device and a laser of the optical receiving device based on the frequency deviation. Another implementation is still applicable to this application. The following example does not constitute a limitation on this application.

For example, the first sequence is divided into a plurality of batches of data, and each batch of data corresponds to the first single-frequency signal and the second single-frequency signal in frequency domain. The optical receiving device compares a phase difference between first single-frequency signals or second single-frequency signals respectively corresponding to two adjacent batches of data in frequency domain. Then, the optical receiving device performs normalization on a length of a batch of data, and then determines frequency deviation between the optical transmitting device and the optical receiving device with reference to the phase difference. Then, the optical receiving device compensates for the frequency difference between the laser of the optical transmitting device and the laser of the optical receiving device based on the frequency deviation.

The signal detection is used for detecting whether there is valid data that arrives at the optical receiving device, to indicate a DSP module of the optical receiving device to enable processing for other data. The clock deviation is used by the DSP module of the optical receiving device to align the clock frequencies between the optical transmitting device and the optical receiving device. The frequency deviation is used by the DSP module of the optical receiving device to compensate for the frequency difference between the laser of the optical transmitting device and the laser of the optical receiving device. Alternatively, the frequency deviation is used by the laser of the optical receiving device to control a frequency of the laser, so that the frequency of the laser of the optical receiving device is aligned with a frequency of the laser of the optical transmitting device.

It can be learned that a signal corresponding to the first sequence in the first transmission frame in frequency domain is a single-frequency signal, so that the optical receiving device completes an operation like clock synchronization and polarization diversity based on the single-frequency signal corresponding to the first sequence in frequency domain. Further, the optical receiving device may further multiplex the single-frequency signal corresponding to the first sequence in frequency domain to complete an operation like frequency synchronization.

The following describes some physical synchronization functions implemented by the optical receiving device based on the second sequence in the first transmission frame and/or the fifth sequence in the second transmission frame.

1. Framing function: The following describes two possible implementations in which the optical receiving device implements framing based on the second sequence. Another implementation is also applicable to this application. This is not specifically limited in this application.

For example, the optical receiving device performs delay cross-correlation on the second sequence in the first transmission frame received by the optical receiving device and a preset second sequence, to obtain a plurality of delay cross-correlation values. The optical receiving device determines a start time domain position of the first transmission frame based on a maximum delay cross-correlation value in the plurality of delay cross-correlation values. The optical receiving device determines a start transmission position of valid data based on the start time domain position.

For example, the optical receiving device performs, based on a length of the preset second sequence, delay cross-correlation on the second sequence in the first transmission frame received by the optical receiving device, to obtain the plurality of delay cross-correlation values. The optical receiving device determines the start time domain position of the first transmission frame based on the maximum delay cross-correlation value in the plurality of delay cross-correlation values. The optical receiving device determines the start transmission position of the valid data based on the start time domain position.

2. Channel estimation:

For example, the optical receiving device may perform channel estimation based on a zero-forcing method, a least square method, or another minimum mean square error criterion-based algorithm and the second sequence.

The foregoing framing process is used by the optical receiving device to determine a start position of the valid data in the first transmission frame. Channel estimation is used for guiding subsequent channel equalization, to improve signal performance of the optical receiving device.

3. Fine frequency offset estimation:

A process in which the optical receiving device determines the frequency deviation between the optical transmitting device and the optical receiving device based on the second sequence is similar to the foregoing process in which the optical receiving device determines the frequency deviation between the optical transmitting device and the optical receiving device based on the first sequence. For details, refer to the foregoing related descriptions.

It can be learned that the second sequence in the first transmission frame has a delay auto-correlation feature, and the auto-correlation is relatively good. This helps improve framing performance. The second sequence carries abundant frequency deviation information. This helps improve channel estimation precision.

Optionally, the first transmission frame further includes a third sequence. The optical receiving device may assist, based on the third sequence, in completing channel estimation. It can be learned that the third sequence may match a structure of the first transmission frame. When a channel condition is poor, the third sequence may be used for assisting in completing channel estimation, to further improve precision of channel estimation.

The technical solutions of this application are applicable to a point-to-multipoint time division multiple access communication system, for example, a direct detection optical time division multiple access system, or a coherent detection time division multiple access system. This application is also applicable to another coherent communication system having a time division multiple access or time domain slicing feature, or a coherent communication system requiring fast physical synchronization, for example, a point-to-point time domain slicing system, an optical switching system, and a point-to-multipoint downlink time domain slicing system.

For example, as shown in FIG. 21, for an uplink, a plurality of leaf nodes share an uplink channel in a time division multiple access manner. Optionally, the uplink channel may be a point-to-multipoint physical entity network, or may be a communication channel including one wavelength or one subcarrier in a network. This is not specifically limited in this application. The leaf nodes respectively send uplink data blocks (namely, transmission frames) in respective specified slots. When uplink data blocks of different leaf nodes arrive at a root node, the uplink data blocks do not overlap in time. As shown in FIG. 21, there may be spacing between adjacent uplink data blocks, or there may be no spacing between adjacent uplink data blocks.

A structure of an uplink data block (namely, a transmission frame) sent by each leaf node is similar to the structure of the first transmission frame in the embodiment shown in FIG. 9. Optionally, optical signal power at which uplink data blocks of different leaf nodes arrive at the root node may be different. After receiving the uplink data block of each leaf node, the root node may implement physical synchronization with each leaf node based on the uplink data block of each leaf node, so that the root node recovers uplink data sent by the leaf node. According to the technical solutions of this application, the root node can accurately restore uplink data of each leaf node, to ensure uplink transmission performance of a point-to-multipoint communication system.

In the foregoing technical solution, the optical transmitting device sends the first transmission frame to the optical receiving device. The first transmission frame includes the first sequence and the second sequence. Therefore, the optical receiving device implements physical synchronization between the optical transmitting device and the optical receiving device based on a transmission frame. For example, the optical receiving device may perform, based on the first sequence, at least one of the following: signal detection, clock recovery, or frequency offset estimation. The optical receiving device performs, based on the second sequence, at least one of the following: framing, channel estimation, and fine frequency offset estimation, to implement physical synchronization between the optical receiving device and the optical transmitting device, so that the optical receiving device restores data sent by the optical transmitting device. The first sequence corresponds to the first single-frequency signal and the second single-frequency signal in frequency domain, so that the optical receiving device completes two operations: clock synchronization and polarization diversity, based on the first single-frequency signal and the second single-frequency signal at the same time. In addition, the optical receiving device may further multiplex the first single-frequency signal and the second single-frequency signal to complete an operation like frequency synchronization.

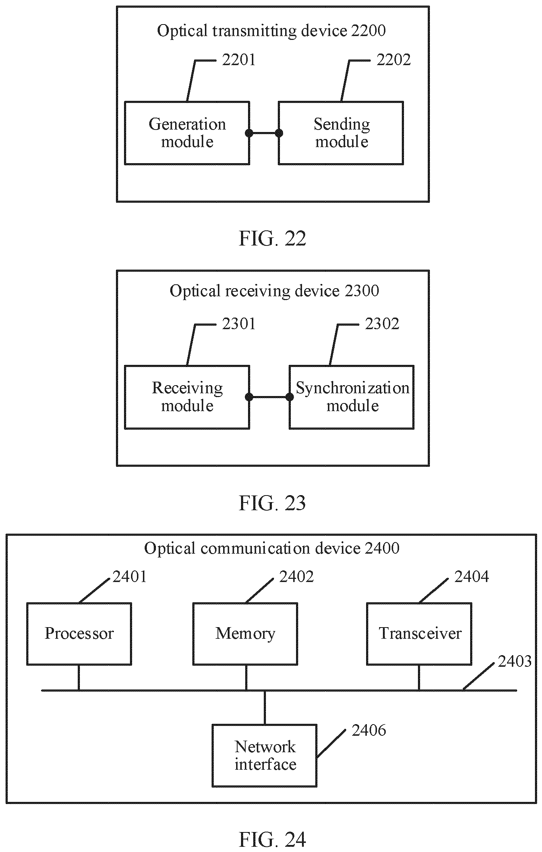

The foregoing describes the transmission method in embodiments of this application. The following describes the optical transmitting device in embodiments of this application. Refer to FIG. 22. An optical transmitting device 2200 includes a generation module 2201 and a sending module 2202.

The generation module 2201 is configured to generate a first transmission frame, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is a part or the whole of a time period in which the optical transmitting device 2200 sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device 2200 to send the first transmission frame.

The sending module 2202 is configured to send the generated first transmission frame to an optical receiving device.

The optical transmitting device 2200 can perform the operations performed by the optical transmitting device in the foregoing embodiments. A specific executions process is in the foregoing embodiments and is not described again.

Optionally, the first transmission frame is a transmission frame corresponding to a first polarization state. The generation module 2201 is further configured to:

generate a second transmission frame corresponding to a second polarization state.

The second transmission frame includes a fourth sequence and a fifth sequence, the fourth sequence corresponds to a third single-frequency signal and a fourth single-frequency signal in frequency domain, a frequency of the third single-frequency signal is fixed in the first time period, a frequency of the fourth single-frequency signal is fixed in the first time period, and the frequency of the third single-frequency signal and the frequency of the fourth single-frequency signal are different in the first time period.

A difference between signal amplitudes of a frequency -domain signal corresponding to the fifth sequence in frequency domain at any two frequencies in second bandwidth is less than a first threshold, or a difference between signal amplitudes of a frequency -domain signal corresponding to the fifth sequence in frequency domain at any two frequencies other than a frequency 0 in second bandwidth is less than a first threshold. The second bandwidth is bandwidth used by the optical transmitting device 2200 to send the second transmission frame.

The sending module 2202 is further configured to:

send the second transmission frame to the optical receiving device.

The following describes the optical receiving device in embodiments of this application. Refer to FIG. 23. An optical receiving device 2300 includes a receiving module 2301 and a synchronization module 2302.

The receiving module 2301 is configured to receive a first transmission frame from an optical transmitting device, where the first transmission frame includes a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame.

The synchronization module 2302 is configured to perform physical synchronization with the optical transmitting device based on the first transmission frame.

The optical receiving device 2300 can perform the operations performed by the optical receiving device in the foregoing embodiments. A specific executions process is in the foregoing embodiments and is not described again.

Optionally, the first transmission frame is a transmission frame corresponding to a first polarization state. The receiving module 2301 is further configured to:

receive, from an optical transmitting device, a second transmission frame corresponding to a second polarization state.

The second transmission frame includes a fourth sequence and a fifth sequence, the fourth sequence corresponds to a third single-frequency signal and a fourth single-frequency signal in frequency domain, a frequency of the third single-frequency signal is fixed in the first time period, a frequency of the fourth single-frequency signal is fixed in the first time period, and the frequency of the third single-frequency signal and the frequency of the fourth single-frequency signal are different in the first time period.

A difference between signal amplitudes of a frequency-domain signal corresponding to the fifth sequence in frequency domain at any two frequencies in second bandwidth is less than a first threshold, or a difference between signal amplitudes of a frequency -domain signal corresponding to the fifth sequence in frequency domain at any two frequencies other than a frequency 0 in second bandwidth is less than a first threshold. The second bandwidth is bandwidth used by the optical transmitting device to send the second transmission frame.

The synchronization module 2302 is specifically configured to:

perform physical synchronization with the optical transmitting device based on the first transmission frame and the second transmission frame.

This application further provides another optical communication device. FIG. 24 is a diagram of another structure of an optical communication device according to an embodiment of this application. The optical communication device 2400 may be the optical transmitting device in the foregoing method embodiments. Alternatively, the optical communication device 2400 may be the optical receiving device in the foregoing method embodiments.

Specifically, the optical communication device 2400 shown in this embodiment includes: a processor 2401, a memory 2402, a bus 2403, a transceiver 2404, and a network interface 2406.

Specifically, the memory 2402 may include a computer storage medium in a form of a volatile memory and/or a non-volatile memory, for example, a read-only memory and/or a random access memory. The memory 2402 may store an operating system, an application program, another program module, executable code, and program data.

The transceiver 2404 may be configured to input a command and information to the optical communication device 2400. The transceiver 2404 may be connected to the processor 2401 via the bus 2403. The transceiver 2404 may be further used by the optical communication device 2400 to output or input information.

The optical communication device 2400 may be connected to a communication network via the network interface 2406. In a networking environment, computer-executable instructions stored in the optical communication device 2400 may be stored in a remote storage device, but are not limited to being stored locally.

When the processor 2401 in the optical communication device 2400 executes the executable code or the application program stored in the memory 2402, the optical communication device 2400 may perform a method operation on any side of the foregoing method embodiments. For a specific execution process, refer to the foregoing method embodiments. Details are not described herein again.

An embodiment of this application further provides an optical communication system. The optical communication system includes an optical transmitting device and an optical receiving device. The optical transmitting device is configured to perform all or some of the steps performed by the optical transmitting device in the embodiment shown in FIG. 9. The optical receiving device is configured to perform all or some of the steps performed by the optical receiving device in the embodiment shown in FIG. 9.

An embodiment of this application further provides a computer program product including instructions. When the computer program product is run on a computer, the computer is enabled to perform the communication method in the embodiment shown in FIG. 9.

An embodiment of this application further provides a computer-readable storage medium, including computer instructions. When the computer instructions are run on a computer, the computer is enabled to perform the method in the embodiment shown in FIG. 9.

An embodiment of this application further provides a data processing chip, including a processor, configured to invoke a program stored in a memory, to enable the processor to perform the method in the embodiment shown in FIG. 9.

Optionally, the data processing chip further includes the memory, and the memory and the processor are interconnected via a line.

Any processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 9. Any memory mentioned above may be a read-only memory (read-only memory, ROM), another type of static storage device that can store static information and instructions, a random access memory (random access memory, RAM), or the like.

The foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A transmission method, wherein the method comprises:

generating, by an optical transmitting device, a first transmission frame, wherein
the first transmission frame comprises a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and

sending, by the optical transmitting device, the first transmission frame to an optical receiving device.

2. The method according to claim 1, wherein the first sequence comprises 128 symbols, 160 symbols, or 192 symbols.

3. The method according to claim 1 or 2, wherein frequency spacing between the frequency of the first single-frequency signal and a reference frequency is equal to frequency spacing between the frequency of the second single-frequency signal and the reference frequency.

4. The method according to any one of claims 1 to 3, wherein the method further comprises:
generating, by the optical transmitting device, the first sequence based on a modulation format of the first transmission frame, wherein the modulation format is a modulation format used by a modulator to modulate the first transmission frame.

5. The method according to claim 4, wherein if the modulation format of the first transmission frame is binary phase shift keying BPSK, the first sequence comprises at least one of the following:
a plurality of repetitions of [1, -1], a plurality of repetitions of [1, 1, -1, -1], or a plurality of repetitions of [1, 1, 1, -1, -1, -1];

if the modulation format of the first transmission frame is quadrature amplitude shift keying 4ASK, the first sequence comprises at least one of the following: a plurality of repetitions of [3, - 3], a plurality of repetitions of [3, 3, -3, -3], or a plurality of repetitions of [3, 3, 3, -3, -3, -3]; or
if the modulation format of the first transmission frame is quadrature phase shift keying QPSK, the first sequence comprises at least one of the following: a plurality of repetitions of [1+j, 1-j], a plurality of repetitions of [-1-j, 1+j], or a plurality of repetitions of [1+j, -1+j, -1-j, 1-j].

6. The method according to any one of claims 1 to 5, wherein the second sequence comprises at least one of the following: a maximum length M sequence, a gold Gold sequence, or a constant amplitude zero auto-correlation CAZAC sequence.

7. The method according to any one of claims 1 to 6, wherein a frequency range corresponding to the first bandwidth is represented as $[-f_1, f_1]$, the any two frequencies fall within a frequency range $[-f_1/L, f_1/L]$, and L is an integer greater than or equal to 2; or
a frequency range corresponding to the first bandwidth is represented as $[-f_1, f_1]$, the any two frequencies fall within a frequency range $[-f_1/L, 0)$ and/or a frequency range $(0, f_1/L]$, and L is an integer greater than or equal to 2.

8. The method according to any one of claims 1 to 7, wherein a quantity of symbols comprised in the second sequence is an integer multiple of 16 or 24.

9. The method according to any one of claims 1 to 8, wherein the first transmission frame further comprises a third sequence, and the third sequence is used for assisting the optical receiving device in performing channel estimation.

10. A transmission method, wherein the method comprises:

receiving, by an optical receiving device, a first transmission frame from an optical transmitting device, wherein the first transmission frame comprises a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and

performing, by the optical receiving device, physical synchronization with the optical transmitting device based on the first transmission frame.

11. The method according to claim 10, wherein the first sequence comprises 128 symbols, 160 symbols, or 192 symbols.

12. The method according to claim 10 or 11, wherein frequency spacing between the frequency of the first single-frequency signal and a reference frequency is equal to frequency spacing between the frequency of the second single-frequency signal and the reference frequency.

13. The method according to any one of claims 10 to 12, wherein the second sequence comprises at least one of the following: a maximum length M sequence, a gold Gold sequence, or a constant amplitude zero auto-correlation CAZAC sequence.

14. The method according to any one of claims 10 to 13, wherein a frequency range corresponding to the first bandwidth is represented as $[-f_1, f_1]$, the any two frequencies fall within a frequency range $[-f_1/L, f_1/L]$, and L is an integer greater than or equal to 2; or

a frequency range corresponding to the first bandwidth is represented as $[-f_1, f_1]$, the any two frequencies fall within a frequency range $[-f_1/L, 0)$ and/or a frequency range $(0, f_1/L]$, and L is an integer greater than or equal to 2.

15. The method according to any one of claims 10 to 14, wherein a quantity of symbols comprised in the second sequence is an integer multiple of 16 or 24.

16. The method according to any one of claims 10 to 15, wherein the second sequence satisfies the following condition: in correlation values obtained by performing a delay auto-correlation operation on the second sequence, a corresponding correlation value when a delay is 0 is the largest, and a difference between a corresponding correlation value when the delay is not 0 and the corresponding correlation value when the delay is 0 is less than or equal to a second threshold; or

the second sequence comprises M subsequences, and at least one subsequence in the M subsequences satisfies the following condition: in correlation values obtained by performing a delay auto-correlation operation on the subsequence, a corresponding correlation value when a delay is 0 is the largest, and a difference between a corresponding correlation value when the delay is not 0 and the corresponding correlation value when the delay is 0 is less than or equal to a second threshold, wherein M is an integer greater than or equal to 2.

17. The method according to any one of claims 10 to 16, wherein the first sequence is used by the optical receiving device to perform at least one of the following: signal detection, polarization diversity, clock recovery, or frequency offset estimation.

18. The method according to any one of claims 10 to 17, wherein the second sequence is used by the optical receiving device to perform at least one of the following: framing, channel estimation, or fine frequency offset estimation.

19. The method according to any one of claims 10 to 18, wherein the first transmission frame further comprises a third sequence, and the third sequence is used for assisting the optical receiving device in performing channel estimation.

20. An optical transmitting device, wherein the optical transmitting device comprises:

a generation module, configured to generate a first transmission frame, wherein

the first transmission frame comprises a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and

a sending module, configured to send the first transmission frame to an optical receiving device.

21. The optical transmitting device according to claim 20, wherein the first sequence comprises 128 symbols, 160 symbols, or 192 symbols.

22. The optical transmitting device according to claim 20 or 21, wherein frequency spacing between the frequency of the first single-frequency signal and a reference frequency is equal to frequency spacing between the frequency of the second single-frequency signal and the reference frequency.

23. The optical transmitting device according to any one of claims 20 to 22, wherein the generation module is specifically configured to:
generate the first sequence based on a modulation format of the first transmission frame, wherein the modulation format is a modulation format used by a modulator to modulate the first transmission frame.

24. The optical transmitting device according to claim 23, wherein if the modulation format of the first transmission frame is binary phase shift keying BPSK, the first sequence comprises at least one of the following: a plurality of repetitions of [1, -1], a plurality of repetitions of [1, 1, - 1, -1], or a plurality of repetitions of [1, 1, 1, -1, -1, -1];

if the modulation format of the first transmission frame is quadrature amplitude shift keying 4ASK, the first sequence comprises at least one of the following: a plurality of repetitions of [3, - 3], a plurality of repetitions of [3, 3, -3, -3], or a plurality of repetitions of [3, 3, 3, -3, -3, -3]; or

if the modulation format of the first transmission frame is quadrature phase shift keying QPSK, the first sequence comprises at least one of the following: a plurality of repetitions of [1+j, 1-j], a plurality of repetitions of [-1-j, 1+j], or a plurality of repetitions of [1+j, -1+j, -1-j, 1-j].

25. The optical transmitting device according to any one of claims 20 to 24, wherein the second sequence comprises at least one of the following: a maximum length M sequence, a gold Gold sequence, or a constant amplitude zero auto-correlation CAZAC sequence.

26. The optical transmitting device according to any one of claims 20 to 25, wherein a frequency range corresponding to the first bandwidth is represented as $[- f_1, f_1]$, the any two frequencies fall within a frequency range $[- f_1/L, f_1/L]$, and L is an integer greater than or equal to 2; or
a frequency range corresponding to the first bandwidth is represented as $[- f_1, f_1]$, the any two frequencies fall within a frequency range $[- f_1/L, 0)$ and/or a frequency range $(0, f_1/L)$, and L is an integer greater than or equal to 2.

27. The optical transmitting device according to any one of claims 20 to 26, wherein a quantity of symbols comprised in the second sequence is an integer multiple of 16 or 24.

28. The optical transmitting device according to any one of claims 20 to 27, wherein the first transmission frame further comprises a third sequence, and the third sequence is used for assisting the optical receiving device in performing channel estimation.

29. An optical receiving device, wherein the optical receiving device comprises:

a receiving module, configured to receive a first transmission frame from an optical transmitting device, wherein the first transmission frame comprises a first sequence and a second sequence, the first sequence corresponds to a first single-frequency signal and a second single-frequency signal in frequency domain, a frequency of the first single-frequency signal is fixed in a first time period, a frequency of the second single-frequency signal is fixed in the first time period, the frequency of the first single-frequency signal and the frequency of the second single-frequency signal are different in the first time period, and the first time period is at least a part of a time period in which the optical transmitting device sends the first sequence; and a difference between signal amplitudes of a frequency-domain signal corresponding to the second sequence in frequency domain at any two frequencies in first bandwidth is less than a first threshold, or a difference between signal amplitudes of a frequency-domain signal corresponding to the second sequence in frequency domain at any two frequencies other than a frequency 0 in first bandwidth is less than a first threshold, and the first bandwidth is bandwidth used by the optical transmitting device to send the first transmission frame; and

a synchronization module, configured to perform physical synchronization with the optical transmitting device based on the first transmission frame.

30. The optical receiving device according to claim 29, wherein the first sequence comprises 128 symbols, 160 symbols, or 192 symbols.

31. The optical receiving device according to claim 29 or 30, wherein frequency spacing between the frequency of the first single-frequency signal and a reference frequency is equal to frequency spacing between the frequency of the second single-frequency signal and the reference frequency.

32. The optical receiving device according to any one of claims 29 to 31, wherein the second sequence comprises at least one of the following: a maximum length M sequence, a gold Gold sequence, or a constant amplitude zero auto-correlation CAZAC sequence.

33. The optical receiving device according to any one of claims 29 to 32, wherein a frequency range corresponding to the first bandwidth is represented as $[- f_1, f_1]$, the any two frequencies fall within a frequency range $[- f_1/L, f_1/L]$, and L is an integer greater than or equal to 2; or

a frequency range corresponding to the first bandwidth is represented as $[- f_1, f_1]$, the any two frequencies fall within a frequency range $[- f_1/L, 0)$ and/or a frequency range $(0, f_1/L]$, and L is an integer greater than or equal to 2.

34. The optical receiving device according to any one of claims 29 to 33, wherein a quantity of symbols comprised in the second sequence is an integer multiple of 16 or 24.

35. The optical receiving device according to any one of claims 29 to 34, wherein the second sequence satisfies the following condition: in correlation values obtained by performing a delay auto-correlation operation on the second sequence, a corresponding correlation value when a delay is 0 is the largest, and a difference between a corresponding correlation value when the delay is not 0 and the corresponding correlation value when the delay is 0 is less than or equal to a second threshold; or

the second sequence comprises M subsequences, and at least one subsequence in the M subsequences satisfies the following condition: in correlation values obtained by performing a delay auto-correlation operation on the subsequence, a corresponding correlation value when a delay is 0 is the largest, and a difference between a corresponding correlation value when the delay is not 0 and the corresponding correlation value when the delay is 0 is less than or equal to a second threshold, wherein M is an integer greater than or equal to 2.

36. The optical receiving device according to any one of claims 29 to 35, wherein the first sequence is used by the optical receiving device to perform at least one of the following: signal detection, polarization diversity, clock recovery, or frequency offset estimation.

37. The optical receiving device according to any one of claims 29 to 36, wherein the second sequence is used by the optical receiving device to perform at least one of the following: framing, channel estimation, or fine frequency offset estimation.

38. The optical receiving device according to any one of claims 29 to 37, wherein the first transmission frame further comprises a third sequence, and the third sequence is used for assisting the optical receiving device in performing channel estimation.

39. A data processing chip, wherein the data processing chip comprises a processor, and the processor is configured to execute a computer program or computer instructions in a memory, to perform the method according to any one of claims 1 to 9 or the method according to any one of claims 10 to 19.

40. The data processing chip according to claim 39, wherein the data processing chip further comprises the memory, and the memory and the processor are interconnected via a line.

41. An optical fiber communication system, comprising an optical transmitting device and an optical receiving device, wherein the optical transmitting device is configured to perform the method according to any one of claims 1 to 9, and the optical receiving device is configured to perform the method according to any one of claims 10 to 19.

100

| Optical line terminal OLT 110 | | Optical splitter 130 |

Optical network unit ONU 120

Optical network unit ONU 121

Optical network unit ONU 122

⋮

Optical network unit ONU 123

FIG. 1

FIG. 2

AGG 1

Optical fiber 1

Optical fiber 2

AGG 2

ACC

ACC

ACC

ACC

ACC

ACC

FIG. 3

| Preamble sequence | Delimiter | Payload |
|---|---|---|

FIG. 4

Optical transmitting device

Digital signal processing DSP module 501

Digital-to-analog converter 502

Radio frequency amplifier 505

Laser 503

Modulator 504

FIG. 5

Optical receiving device

Digital signal
processing
DSP module
601

Digital-to-
analog
converter 602

Radio
frequency
amplifier 605

Laser 603

FIG. 6

Optical transmitting device

Digital-to-
analog
converter 702

Radio
frequency
amplifier 704

Single
polarization
modulator 707

Digital signal
processing
DSP module
701

Laser 706

Polarization
beam
combiner 709

Single
polarization
modulator 708

Digital-to-
analog
converter 703

Radio
frequency
amplifier 705

FIG. 7

EP 4 557 639 A1

Optical receiving device

Laser 802 → Coherent detection module 803 → Analog-to-digital converter 804 → Digital signal processing DSP module 801

Received communication optical signal →

FIG. 8

Optical transmitting device

Optical receiving device

901: Generate a first transmission frame (the first transmission frame includes a first sequence and a second sequence)

901a: Generate a second transmission frame (the second transmission frame includes a fourth sequence and a fifth sequence)

902: First transmission frame

902a: Second transmission frame

903: Perform physical synchronization with the optical transmitting device based on the first transmission frame

FIG. 9

| First sequence | Second sequence | Third sequence | Payload | Frame trailer |
|---|---|---|---|---|

FIG. 10

FIG. 11

FIG. 12

FIG. 13

FIG. 14

FIG. 15

FIG. 16

FIG. 17

FIG. 18

Start time domain
position of a first
transmission frame

First transmission
frame corresponding
to an X polarization
state

| First sequence | Second sequence | Third sequence | Payload | Frame trailer |

Second
transmission frame
corresponding to a
Y polarization
state

| Fourth sequence | Fifth sequence | Sixth sequence | Payload | Frame trailer |

Start time domain
position of the second
transmission frame

FIG. 19

Signal
detection

↓

Polarization
diversity

Clock
recovery

Frequency
offset
estimation

Framing (optionally,
fine frequency offset
estimation)

↓

Channel estimation

FIG. 20

Uplink data block transmitted
by the leaf node 1

Leaf node 1

Leaf node 1     Leaf node 2     ...     Leaf node n

A root node receives uplink data
blocks from the different leaf nodes

FIG. 21

Optical transmitting device 2200

— 2201 — 2202

Generation module — Sending module

FIG. 22

Optical receiving device 2300

— 2301 — 2302

Receiving module — Synchronization module

FIG. 23

Optical communication device 2400

2401 · 2402 · 2404

Processor — Memory — Transceiver

2403

Network interface · 2406

FIG. 24

## INTERNATIONAL SEARCH REPORT

| International application No. |
|---|
| **PCT/CN2023/104752** |

### A.    CLASSIFICATION OF SUBJECT MATTER

H04J 3/06(2006.01)i;  H04B10/60(2013.01)i

According to International Patent Classification (IPC) or to both national classification and IPC

### B.    FIELDS SEARCHED

Minimum documentation searched (classification system followed by classification symbols)

IPC: H04J,H04B,H04L,H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE: OLT, ONU, 局端设备, 光线路终端, 光网络单元, 帧, 同步, 时间, 频率, 频域, 序列, 信号, 带宽, 阈值, 门限, optical line terminal, optical network unit, frame, synchron+, time, frequency, sequence, signal, band, threshold

### C.    DOCUMENTS CONSIDERED TO BE RELEVANT

| Category* | Citation of document, with indication, where appropriate, of the relevant passages | Relevant to claim No. |
|---|---|---|
| A | CN 114696916 A (HUAWEI TECHNOLOGIES CO., LTD.) 01 July 2022 (2022-07-01) description, paragraphs [0045]-[0211], and figures 2 and 3 | 1-41 |
| A | CN 112312239 A (WUHAN RESEARCH INSTITUTE OF POSTS & TELECOMMUNICATIONS CO., LTD.) 02 February 2021 (2021-02-02) entire document | 1-41 |
| A | CN 110324089 A (HUAWEI TECHNOLOGIES CO., LTD.) 11 October 2019 (2019-10-11) entire document | 1-41 |
| A | CN 112368964 A (HUAWEI TECHNOLOGIES CO., LTD.) 12 February 2021 (2021-02-12) entire document | 1-41 |
| A | EP 3945686 A1 (NOKIA TECHNOLOGIES OY) 02 February 2022 (2022-02-02) entire document | 1-41 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 October 2023** | **12 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104752**

| Patent document cited in search report | | | Publication date (day/month/year) | Patent family member(s) | | | Publication date (day/month/year) |
|---|---|---|---|---|---|---|---|
| CN | 114696916 | A | 01 July 2022 | WO | 2022143776 | A1 | 07 July 2022 |
| CN | 112312239 | A | 02 February 2021 | | None | | |
| CN | 110324089 | A | 11 October 2019 | WO | 2019184819 | A1 | 03 October 2019 |
| CN | 112368964 | A | 12 February 2021 | WO | 2020078016 | A1 | 23 April 2020 |
| | | | | US | 2020382241 | A1 | 03 December 2020 |
| EP | 3945686 | A1 | 02 February 2022 | CN | 113993009 | A | 28 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210893253